(19) Europäisches Patentamt
European Patent Office
Office européen des brevets

(11) **EP 4 694 120 A1**

(12) **EUROPEAN PATENT APPLICATION**
published in accordance with Art. 153(4) EPC

(43) Date of publication:
**11.02.2026 Bulletin 2026/07**

(21) Application number: **24853708.6**

(22) Date of filing: **09.08.2024**

(51) International Patent Classification (IPC):
*H04N 19/157* ^(2014.01)

(52) Cooperative Patent Classification (CPC):
**H04N 19/157; H04N 19/186; H04N 19/30;**
**H04N 19/44; H04N 19/70**

(86) International application number:
**PCT/CN2024/111115**

(87) International publication number:
**WO 2025/036299 (20.02.2025 Gazette 2025/08)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **15.08.2023 CN 202311035466**
**06.08.2024 CN 202411079347**

(71) Applicant: **Huawei Technologies Co., Ltd.**
**Shenzhen, Guangdong 518129 (CN)**

(72) Inventors:
• **WANG, Yichuan**
**Shenzhen, Guangdong 518129 (CN)**
• **XU, Weiwei**
**Shenzhen, Guangdong 518129 (CN)**
• **YU, Quanhe**
**Shenzhen, Guangdong 518129 (CN)**

(74) Representative: **Eisenführ Speiser**
**Patentanwälte Rechtsanwälte PartGmbB**
**Johannes-Brahms-Platz 1**
**20355 Hamburg (DE)**

(54) **ENCODING METHOD, DECODING METHOD, AND RELATED DEVICE**

(57) This application provides an encoding method, a decoding method, and a related device. The method includes: obtaining a first HDR image and N pieces of first base-layer data corresponding to the first HDR image; determining N pieces of first enhancement-layer data based on the first HDR image, the N pieces of first base-layer data, and at least one encoding scheme, where N is a positive integer greater than or equal to 1; and encoding the N pieces of first enhancement-layer data, the N pieces of first base-layer data, and first metadata to obtain a bitstream, where the first metadata includes first indication information, and the first indication information indicates the at least one encoding scheme or a decoding scheme corresponding to the at least one encoding scheme. The foregoing technical solution can implement flexible format conversion, improving encoding efficiency and final synthesis effect.

[FIG. 12]

Obtain a first HDR image and N pieces of first base-layer data corresponding to the first HDR image — 1201

Determine N pieces of first enhancement-layer data based on the first HDR image, the N pieces of first base-layer data, and at least one first encoding scheme — 1202

Encode the N pieces of first enhancement-layer data, the N pieces of first base-layer data, and first metadata to obtain a bitstream — 1203

**Description**

This application claims priorities to Chinese Patent Application No. 202311035466.0, filed with the China National Intellectual Property Administration on August 15, 2023, and entitled "CODING METHOD AND RELATED DEVICE", and to Chinese Patent Application No. 202411079347.X, filed with the China National Intellectual Property Administration on August 6, 2024, and entitled "ENCODING METHOD, DECODING METHOD, AND RELATED DEVICE", both of which are incorporated herein by reference in their entireties.

TECHNICAL FIELD

This application relates to the encoding and decoding field, and more specifically, to an encoding method, a decoding method, and a related device.

BACKGROUND

A dynamic range (dynamic range) indicates a ratio of a maximum value to a minimum value of a variable in many fields. For a digital image, the dynamic range is a ratio of a maximum grayscale value to a minimum grayscale value in a range in which the image can be displayed. The dynamic range in nature is quite large. A night scene under the starry sky has a luminance of approximately 0.001 cd/m$^2$. The sun has a luminance up to 1000000000 cd/m$^2$. Such a dynamic range achieves an order of magnitude of $1000000000/0.001=10^{13}$. However, the luminance of the sun and the luminance of the star are not obtained at the same time in a real scene in nature. For a natural scene in the real world, a dynamic range is from $10^{-3}$ to $10^6$. Currently, in most color digital images, each of red (red, R), green (green, G), and blue (blue, B) channels uses an 8-bit byte for storage. In other words, a representation range of each channel is a grayscale level of 0 to 255. 0 to 255 herein is a dynamic range of an image. In the real world, a dynamic range in a same scenario is from $10^{-3}$ to $10^6$, which may be referred to as a high dynamic range (high dynamic range, HDR). Correspondingly, a dynamic range of a common picture or video is a low dynamic range (low dynamic range, LDR).

An HDR image or an HDR video may need to be transcoded in a delivery or transmission process. In a current HDR transcoding scheme, the HDR image or the HDR video is directly transcoded. After the HDR image or the HDR video is decoded, HDR pixel values and an HDR format identifier and information are obtained. The HDR pixel values usually need to be processed (for example, processing such as image upsampling and downsampling and enhancement). The HDR format identifier and information, and processed HDR pixel values are then sent to an encoder for re-encoding. A re-encoded HDR image or HDR video is delivered to another device. This scheme (which may be referred to as a "single-layer transcoding scheme") in which an HDR image or an HDR video is directly transcoded may cause an exception in a transcoded HDR image or HDR video, affecting user experience.

Therefore, how to provide a more flexible and effective encoding/decoding scheme is an urgent problem to be resolved in this field.

SUMMARY

This application provides an encoding method, a decoding method, and a related device, to implement flexible format conversion, and improve encoding and decoding efficiency and final synthesis effect.

According to a first aspect, an embodiment of this application provides an encoding method. The method includes: obtaining a first HDR image and N pieces of first base-layer data corresponding to the first HDR image; determining N pieces of first enhancement-layer data based on the first HDR image, the N pieces of first base-layer data, and at least one encoding scheme, where N is a positive integer greater than or equal to 1; and encoding the N pieces of first enhancement-layer data, the N pieces of first base-layer data, and first metadata to obtain a bitstream, where the first metadata includes first indication information, and the first indication information indicates the at least one encoding scheme or a decoding scheme corresponding to the at least one encoding scheme.

In the foregoing technical solution, information required for decoding is carried in the first metadata, and the first metadata and the data of the HDR image are encoded together to obtain a bitstream. In this way, a decoding device may determine the decoding scheme based on the first metadata, and then decode the received data by using the determined decoding scheme. Because the decoding device can learn the decoding scheme, an encoder side can flexibly select the encoding scheme based on a requirement, improving encoding efficiency and final synthesis effect.

With reference to the first aspect, in a possible implementation of the first aspect, determining the N pieces of first enhancement-layer data based on the first HDR image, the N pieces of first base-layer data, and the at least one encoding scheme includes: determining N pieces of intermediate enhanced data based on the first HDR image and the N pieces of first base-layer data; and encoding the N pieces of intermediate enhanced data based on the at least one encoding scheme, to obtain the N pieces of first enhancement-layer data.

With reference to the first aspect, in a possible implementation of the first aspect, encoding the N pieces of intermediate enhanced data based on the at least one encoding scheme, to obtain the N pieces of first enhancement-layer data includes: encoding an $i^{th}$ piece of intermediate enhanced data in the N pieces of intermediate enhanced data by using $N_i$ encoding schemes separately, to obtain an $i^{th}$ piece of first enhancement-layer data in the N pieces of first enhancement-layer data, where the $i^{th}$ piece of first enhancement-layer data includes $N_i$ regions; and encoding the $i^{th}$ piece of intermediate enhanced data by using the $N_i$ encoding schemes includes: encoding $N_i$ regions of the $i^{th}$ piece of intermediate enhanced data by using the $N_i$ encoding schemes, where $N_i$ is a positive integer greater than or equal to 2, and i=1, ..., N.

In the foregoing technical solution, the enhancement-layer data is divided into a plurality of regions, and each region is encoded by using a corresponding encoding scheme. In this way, appropriate encoding schemes can be selected based on characteristics of different regions, further improving encoding efficiency and final synthesis effect.

With reference to the first aspect, in a possible implementation of the first aspect, the at least one encoding scheme includes M groups of encoding schemes, an $i^{th}$ group of encoding schemes in the M groups of encoding schemes include the $N_i$ encoding schemes, and M is a positive integer greater than or equal to 1.

With reference to the first aspect, in a possible implementation of the first aspect, the at least one encoding scheme includes M encoding schemes, and encoding the N pieces of intermediate enhanced data based on the at least one encoding scheme, to obtain the N pieces of first enhancement-layer data includes: encoding an $i^{th}$ piece of intermediate enhanced data in the N pieces of intermediate enhanced data by using an $i^{th}$ encoding scheme in the M encoding schemes, to obtain an $i^{th}$ piece of first enhancement-layer data in the N pieces of first enhancement-layer data, where M is a positive integer greater than or equal to 1, and i=1, ..., N.

Based on the foregoing technical solution, appropriate encoding schemes can be selected for different intermediate enhancement-layer data, improving encoding efficiency and a final synthesis effect.

With reference to the first aspect, in a possible implementation of the first aspect, determining the N pieces of intermediate enhanced data based on the first HDR image and the N pieces of first base-layer data includes: determining N pieces of reference intermediate enhanced data based on the first HDR image and the N pieces of first base-layer data, where the reference intermediate enhanced data is multi-channel data; and determining the $i^{th}$ piece of intermediate enhanced data in the N pieces of intermediate enhanced data based on an $i^{th}$ piece of reference intermediate enhanced data in the N pieces of reference intermediate enhanced data, where the intermediate enhanced data is single-channel data, and i=1, ..., N.

With reference to the first aspect, in a possible implementation of the first aspect, determining the $i^{th}$ piece of intermediate enhanced data in the N pieces of intermediate enhanced data based on the $i^{th}$ piece of reference intermediate enhanced data in the N pieces of reference intermediate enhanced data includes: determining that the $i^{th}$ piece of intermediate enhanced data includes data of one channel of the $i^{th}$ piece of reference intermediate enhanced data.

In the foregoing technical solution, an encoding scheme is selected by using a channel in multi-channel data as a granularity, improving encoding efficiency and a final synthesis effect.

With reference to the first aspect, in a possible implementation of the first aspect, determining the $i^{th}$ piece of intermediate enhanced data in the N pieces of intermediate enhanced data based on the $i^{th}$ piece of reference intermediate enhanced data in the N pieces of reference intermediate enhanced data includes: separately transforming multi-channel data of the $i^{th}$ piece of reference intermediate enhanced data to obtain a plurality of transformation results, where the plurality of transformation results are in a one-to-one correspondence with the multi-channel data, and each transformation result in the plurality of transformation results is obtained after a corresponding channel is transformed; and determining that the $i^{th}$ piece of intermediate enhanced data is a transformation result in the plurality of transformation results.

The multi-channel data is changed and then encoded, so that encoding efficiency and a final synthesis effect can be further improved.

With reference to the first aspect, in a possible implementation of the first aspect, determining the $i^{th}$ piece of intermediate enhanced data in the N pieces of intermediate enhanced data based on the $i^{th}$ piece of reference intermediate enhanced data in the N pieces of reference intermediate enhanced data includes: determining the $i^{th}$ piece of intermediate enhanced data based on a function relationship and multi-channel data of the $i^{th}$ piece of reference intermediate enhanced data.

With reference to the first aspect, in a possible implementation of the first aspect, the $i^{th}$ piece of intermediate enhanced data includes values of a plurality of pixels, each pixel in the plurality of pixels corresponds to a plurality of groups of pixels, the plurality of groups of pixels respectively belong to the multi-channel data of the $i^{th}$ piece of reference intermediate enhanced data, each group of pixels in the plurality of groups of pixels include at least one pixel, and a pixel value of each pixel in the plurality of pixels is determined based on pixel values of the corresponding plurality of groups of pixels and the function relationship.

With reference to the first aspect, in a possible implementation of the first aspect, the at least one encoding scheme includes one or more of the following encoding schemes: PQ encoding, HLG encoding, gamma encoding, log encoding, or any curve encoding.

With reference to the first aspect, in a possible implementation of the first aspect, the first indication information indicates: at least one encoding function; the at least one encoding function and a parameter of each encoding function in the at least one encoding function; at least one decoding function; or the at least one decoding function and a parameter of each decoding function in the at least one decoding function.

According to a second aspect, an embodiment of this application provides a decoding method. The method includes: decoding an obtained bitstream, to obtain N pieces of first enhancement-layer data, N pieces of first base-layer data, and first metadata, where the first metadata includes first indication information, the first indication information is used to determine at least one decoding scheme, and N is a positive integer greater than or equal to 1; and determining a second HDR image based on the at least one decoding scheme, the N pieces of first base-layer data, and the N pieces of first enhancement-layer data.

In the foregoing technical solution, information required for decoding is carried in the first metadata, and the first metadata and the data of the HDR image are encoded together to obtain a bitstream. In this way, a decoding device may determine the decoding scheme based on the first metadata, and then decode the received data by using the determined decoding scheme. Because the decoding device can learn the decoding scheme, an encoder side can flexibly select the encoding scheme based on a requirement, improving encoding efficiency and final synthesis effect.

With reference to the second aspect, in a possible implementation of the second aspect, determining the second HDR image based on the at least one decoding scheme, the N pieces of first base-layer data, and the N pieces of first enhancement layer includes: decoding the N pieces of first enhancement-layer data based on the at least one decoding scheme, to obtain N pieces of second enhancement-layer data; and determining the second HDR image based on the N pieces of first base-layer data and the N pieces of second enhancement-layer data.

With reference to the second aspect, in a possible implementation of the second aspect, decoding the N pieces of first enhancement-layer data based on the at least one decoding scheme, to obtain the N pieces of second enhancement-layer data includes: decoding an $i^{th}$ piece of first enhanced data in the N pieces of first enhanced data separately by using $N_i$ decoding schemes, to obtain an $i^{th}$ piece of second enhancement-layer data in the N pieces of second enhancement-layer data, where the $i^{th}$ piece of first enhancement-layer data includes $N_i$ regions; and decoding the $i^{th}$ piece of first enhanced data by using the $N_i$ decoding schemes includes: decoding the $N_i$ regions of the $i^{th}$ piece of first enhanced data by using the $N_i$ decoding schemes, where $N_i$ is a positive integer greater than or equal to 2, and i=1, ..., N.

In the foregoing technical solution, the enhancement-layer data is divided into a plurality of regions, and each region is encoded by using a corresponding encoding scheme. In this way, appropriate encoding schemes can be selected based on characteristics of different regions, further improving encoding efficiency and final synthesis effect.

With reference to the second aspect, in a possible implementation of the second aspect, the at least one decoding scheme includes M groups of decoding schemes, an $i^{th}$ group of decoding schemes in the M groups of decoding schemes include the $N_i$ decoding schemes, and M is a positive integer greater than or equal to 1.

With reference to the second aspect, in a possible implementation of the second aspect, the at least one decoding scheme includes M decoding schemes; and decoding the N pieces of first enhancement-layer data based on the at least one decoding scheme, to obtain the N pieces of second enhancement-layer data includes: decoding an $i^{th}$ piece of first enhancement-layer data in the N pieces of first enhancement-layer data by using an $i^{th}$ decoding scheme in the M decoding schemes, to obtain an $i^{th}$ piece of second enhancement-layer data in the N pieces of second enhancement-layer data, where M is a positive integer greater than or equal to 1, and i=1, ..., N.

Based on the foregoing technical solution, appropriate encoding schemes can be selected for different intermediate enhancement-layer data, improving encoding efficiency and a final synthesis effect.

With reference to the second aspect, in a possible implementation of the second aspect, the at least one decoding scheme includes a decoding scheme corresponding to one or more encoding schemes in the following encoding schemes: PQ encoding, HLG encoding, gamma encoding, log encoding, or any curve encoding.

With reference to the second aspect, in a possible implementation of the second aspect, the first indication information indicates: at least one encoding function; the at least one encoding function and a parameter of each encoding function in the at least one encoding function; at least one decoding function; or the at least one decoding function and a parameter of each decoding function in the at least one decoding function.

According to a third aspect, an embodiment of this application provides an electronic device. The electronic device includes units configured to implement any one of the first aspect or the possible implementations of the first aspect.

For example, the electronic device may be an encoder.

According to a fourth aspect, an embodiment of this application provides an electronic device. The electronic device includes units configured to implement any one of the second aspect or the possible implementations of the second aspect.

For example, the electronic device may be a decoder.

According to a fifth aspect, an embodiment of this application provides an electronic device. The electronic device includes a processor. The processor is configured to: be coupled to a memory, and read and execute instructions and/or program code in the memory, to perform any one of the first aspect or the possible implementations of the first aspect.

According to a sixth aspect, an embodiment of this application provides an electronic device. The electronic device includes a processor. The processor is configured to: be coupled to a memory, and read and execute instructions and/or program code in the memory, to perform any one of the second aspect or the possible implementations of the second aspect.

According to a seventh aspect, an embodiment of this application provides a system on chip. The system on chip includes a logic circuit. The logic circuit is configured to: be coupled to an input/output interface, and transmit data through the input/output interface, to perform any one of the first aspect or the possible implementations of the first aspect.

According to an eighth aspect, an embodiment of this application provides a system on chip. The system on chip includes a logic circuit. The logic circuit is configured to: be coupled to an input/output interface, and transmit data through the input/output interface, to perform any one of the second aspect or the possible implementations of the second aspect.

According to a ninth aspect, an embodiment of this application provides a computer-readable storage medium. The computer-readable storage medium stores program code. When the program code stored in the computer storage medium is run on a computer, the computer is enabled to perform any one of the first aspect or the possible implementations of the first aspect.

According to a tenth aspect, an embodiment of this application provides a computer-readable storage medium. The computer-readable storage medium stores program code. When the program code stored in the computer storage medium is run on a computer, the computer is enabled to perform any one of the second aspect or the possible implementations of the second aspect.

According to an eleventh aspect, an embodiment of this application provides a computer program product. The computer program product includes computer program code. When the computer program code is run on a computer, the computer is enabled to perform any one of the second aspect or the possible implementations of the second aspect.

According to a twelfth aspect, an embodiment of this application provides a computer program product. The computer program product includes computer program code. When the computer program code is run on a computer, the computer is enabled to perform any one of the second aspect or the possible implementations of the second aspect.

According to a thirteenth aspect, an embodiment of this application provides a bitstream, where the bitstream is determined based on any one of the first aspect or the possible implementations of the first aspect.

According to a fourteenth aspect, an embodiment of this application provides a bitstream. The bitstream includes N pieces of base-layer data corresponding to a first HDR image, N pieces of enhancement-layer data, and first metadata, where the first metadata indicates at least one encoding scheme for encoding the N pieces of enhancement-layer data or a decoding scheme corresponding to the at least one encoding scheme.

According to a fifteenth aspect, an embodiment of this application provides a bitstream storage apparatus. The apparatus is configured to store the bitstream in the thirteenth aspect or the fourteenth aspect.

According to a sixteenth aspect, an embodiment of this application provides a bitstream transmission apparatus. The apparatus includes a transmitter and a receiver, the receiver is configured to receive a bitstream generated based on the encoding method in the first aspect, and the transmitter is configured to send the bitstream to a client device by using a transmission medium.

According to a seventeenth aspect, an embodiment of this application provides a bitstream transmission apparatus. The apparatus includes a transmitter and at least one storage medium, the at least one storage medium is configured to store a bitstream generated based on the encoding method in the first aspect, and the transmitter is configured to: obtain the bitstream from the storage medium and send the bitstream to a client device by using a transmission medium.

According to an eighteenth aspect, an embodiment of this application provides a bitstream delivery system. The system includes: at least one storage medium, configured to store a bitstream generated based on the encoding method in the first aspect; and a streaming media server, configured to: obtain a target bitstream from the at least one storage medium and send the target bitstream to a client device, where the streaming media server includes a content server or a content delivery server.

BRIEF DESCRIPTION OF DRAWINGS

FIG. 1 is a diagram of dynamic range mapping;
FIG. 2 is an image of a PQ optical-electro transfer function;
FIG. 3 is an image of an HLG optical-electro transfer function;
FIG. 4 is an image of an SLF optical-electro transfer function;
FIG. 5 is a block diagram of an encoding-decoding system to which an embodiment of this application is applied;
FIG. 6 is a block diagram of a content provider system for implementing a content delivery service to which an embodiment of this application is applied;

FIG. 7 is a schematic flowchart of working of a streaming media system to which an embodiment of this application is applicable;

FIG. 8 is an example diagram of an end-to-end process according to this application;

FIG. 9 is an example diagram of a streaming media system architecture according to this application;

FIG. 10 is a diagram of a possible system architecture to which an embodiment of this application is applicable;

FIG. 11 is a diagram of a digital signal processing method according to an embodiment of this application;

FIG. 12 is a schematic flowchart of an encoding method according to an embodiment of this application;

FIG. 13 is a schematic flowchart of a decoding method according to an embodiment of this application;

FIG. 14 is a block diagram of a structure of an electronic device according to an embodiment of this application; and

FIG. 15 is a block diagram of a structure of another electronic device according to an embodiment of this application.

DESCRIPTION OF EMBODIMENTS

The following describes technical solutions of this application with reference to accompanying drawings.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a singular item (piece) or any combination of plural items (pieces). For example, at least one of a, b, or c may represent a, b, c, a-b, a-c, b-c, or a-b-c, where a, b, and c may be singular or plural.

For ease of understanding of embodiments of this application, some concepts or terms in embodiments of this application are first explained.

A color value (color value) is a value corresponding to a particular color component (for example, R, G, B, or Y) of an image.

A digital code value (digital code value) is a digital expression value of an image signal, and the digital code value represents a nonlinear color value.

A linear color value (linear color value) is in direct proportion to light intensity, needs to be normalized to [0, 1] in an optional case, and is abbreviated as E.

A nonlinear color value (nonlinear color value) is a normalized digital expression value of image information, is in direct proportion to a digital code value, needs to be normalized to [0, 1] in an optional case, and is abbreviated as E'.

An electro-optical transfer function (electro-optical transfer function, EOTF) describes a relationship of conversion from a nonlinear color value to a linear color value.

Metadata (metadata) is data that is carried in a video signal and that describes video source information.

Dynamic metadata (dynamic metadata) is metadata associated with each frame of image, and the metadata changes with pictures.

Static metadata (static metadata) is metadata associated with an image sequence, and the metadata remains unchanged in the image sequence.

A luma signal (luma) represents a combination of nonlinear color signals, and has a symbol of Y'.

Luminance mapping (luminance mapping) is mapping from luminance of a source image to luminance of a target system.

Display adaptation (display adaptation) is to process a video signal to adapt to a display property of a target display.

A source image (source picture) is an image that is input at an HDR pre-processing stage.

A mastering display (mastering display) is a reference display used when a video signal is edited and produced, and is used to determine editing and producing effects of a video.

A linear scene light (linear scene light) signal is an HDR video signal that uses content as scene light in an HDR video technology, means scene light captured by a camera/camera sensor, and is generally a relative value. An HLG signal is obtained after hybrid log-gamma (hybrid log-gamma, HLG) encoding is performed on the linear scene light signal. The HLG signal is a scene light signal, and the HLG signal is nonlinear. The scene light signal generally needs to be converted into a display light signal through an OOTF for display on a display device.

A linear display light (linear display light) signal is an HDR video signal that uses content as display light in the HDR video technology, means display light emitted on a display device, and is generally an absolute value in a unit of nit (nit). A PQ signal is obtained after perceptual quantization (perceptual quantization, PQ) encoding is performed on the linear display light signal. The PQ signal is a display light signal and the PQ signal is a nonlinear signal. Based on a general standard, the display light signal is displayed on the display device based on absolute luminance of the display light signal.

An opto-optical transfer curve (opto-optical transfer function, OOTF) is a curve that converts a light signal into another light signal in a video technology.

A dynamic range (dynamic range) is a ratio of maximum luminance to minimum luminance of a video signal.

Luma-chroma-chroma (luma-chroma-chroma, LCC) are three components of a luma-chroma separated video signal.

An optical-electro transfer function (optical-electro transfer function, OETF) represents a conversion relationship between a linear signal and a nonlinear signal of an image pixel. Currently, commonly used optical-electro transfer functions include the following three types:

a perceptual quantizer (perceptual quantizer, PQ) optical-electro transfer function, a hybrid log-gamma (hybrid log-gamma, HLG) optical-electro transfer function, and a scene luminance fidelity (scene luminance fidelity, SLF) optical-electro transfer function. The three optical-electro transfer functions are optical-electro transfer functions specified in the audio video coding standard (audio video coding standard, AVS).

The dynamic range (dynamic range) indicates a ratio of a maximum value to a minimum value of a variable in many fields. For a digital image, the dynamic range is a ratio of a maximum grayscale value to a minimum grayscale value in a range in which the image can be displayed. The dynamic range in nature is quite large. A night scene under the starry sky has a luminance of approximately 0.001 cd/m$^2$. The sun has a luminance up to 1000000000 cd/m$^2$. Such a dynamic range achieves an order of magnitude of $1000000000/0.001 = 10^{13}$. However, the luminance of the sun and the luminance of the star are not obtained at the same time in a real scene in nature. For a natural scene in the real world, a dynamic range is from $10^{-3}$ to $10^6$. Currently, in most color digital images, each of R, G, and B channels uses an 8-bit byte for storage. In other words, a representation range of each channel is a grayscale level of 0 to 255. 0 to 255 herein is a dynamic range of an image. In the real world, a dynamic range in a same scenario is from $10^{-3}$ to $10^6$, which is referred to as a high dynamic range (high dynamic range, HDR). Correspondingly, a dynamic range of a common picture is a low dynamic range (low dynamic range, LDR). An imaging process of a digital camera is actually mapping from the high dynamic range of the real world to a low dynamic range of a photo. This is usually a nonlinear process.

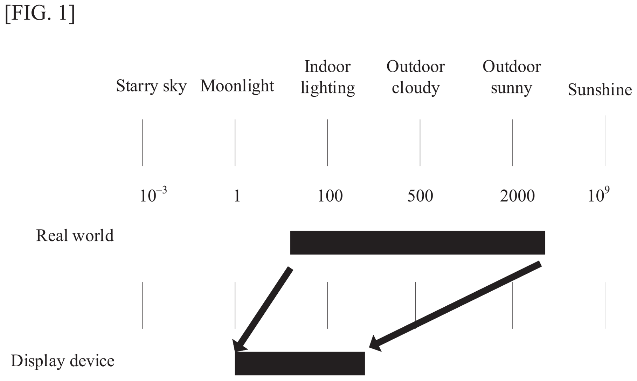

FIG. 1 is a diagram of dynamic range mapping.

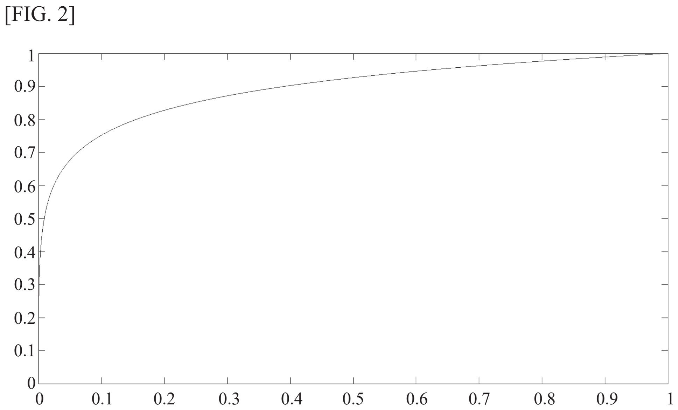

A PQ optical-electro transfer function is a perceptual quantizer optical-electro transfer function provided based on a luminance perception model for human eyes. Refer to FIG. 2. FIG. 2 is an image of a PQ optical-electro transfer function. The PQ optical-electro transfer function represents a conversion relationship between a linear signal value of an image pixel and a nonlinear signal value in a PQ domain.

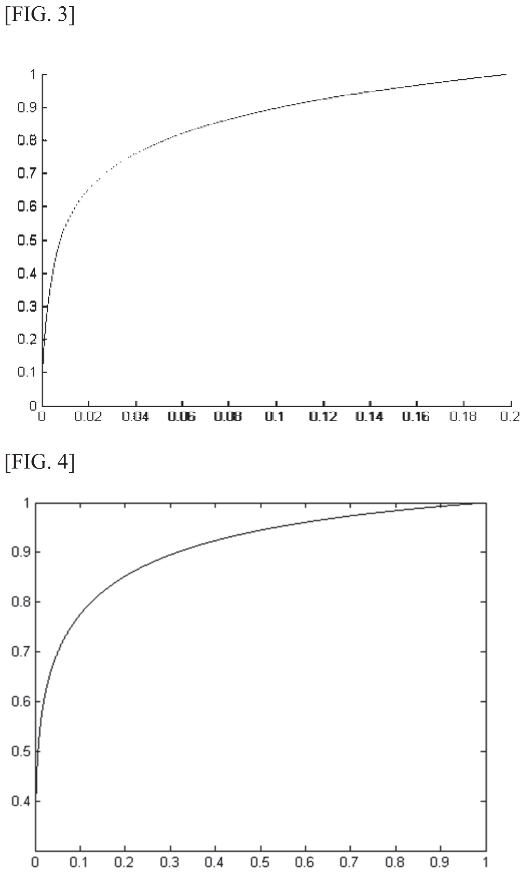

The HLG optical-electro transfer function is obtained by improving a conventional gamma curve. Refer to FIG. 3. FIG. 3 is an image of an HLG optical-electro transfer function. For the HLG optical-electro transfer function, the conventional gamma curve is used in the lower segment, and a log curve is added to the upper segment. The HLG optical-electro transfer function represents a conversion relationship between a linear signal value of an image pixel and a nonlinear signal value in an HLG domain.

The SLF optical-electro transfer function is an optimal curve obtained based on luminance delivery in an HDR scene when optical characteristics of human eyes are satisfied. Refer to FIG. 4. FIG. 4 is an image of an SLF optical-electro transfer function. An SLF optical-electro transfer curve indicates a conversion relationship between a linear signal value of an image pixel and a nonlinear signal value in an SLF domain.

Linear space in this application is space in which a linear light signal is located.

Nonlinear space in this application is space in which a signal obtained after a linear light signal is converted by using a nonlinear curve is located. Common nonlinear curves of the HDR include a PQ EOTF-1 curve, an HLG OETF curve, and the like, and a common nonlinear curve of the SDR includes a gamma curve. Generally, it is considered that a signal obtained after a linear light signal is encoded by using the nonlinear curve is visually linear relative to human eyes. It should be understood that the nonlinear space may be considered as visual linear space.

Gamma correction (gamma correction) is a method for performing nonlinear tone editing on an image. A dark-colored part and a light-colored part in the image signal can be detected, and proportions of the dark-colored part and the light-colored part are increased, improving image contrast effect. Optical-electro transfer features of current displays, photographic films, and many electronic cameras may be nonlinear. A relationship between outputs and inputs of these nonlinear components may be represented by using a power function, namely: output=(input)γ.

Because a visual system of the human being is nonlinear, and the human being perceives a visual stimulation through comparison, nonlinear conversion is performed on a color value output by a device. Stimulation is enhanced by the outside world at a particular proportion, and for the human being, such stimulation evenly increases. Therefore, for perception of the human being, a physical quantity increasing in a geometric progression is even. To display input colors based on a visual law of the human being, nonlinear conversion in the form of the power function is needed, to convert a linear color value into a nonlinear color value. A value γ of gamma may be determined based on an optical-electro transfer curve of color space.

For the color space (color space), colors may be different perceptions of eyes for light rays having different frequencies, or may represent objectively existing light having different frequencies. The color space is a color range defined by a coordinate system that is established by people to represent colors. Color gamut and a color model define color space together. The color model is an abstract mathematical model that represents a color by using a group of color components. The color model may include, for example, a red green blue (red green blue, RGB) mode and a cyan magenta yellow key plate (cyan magenta yellow key plate, CMYK) mode. The color gamut is a sum of colors that can be generated by a system. For example, Adobe RGB and sRGB are different color space based on an RGB model. Each device such as a display or a printer has color space, and can generate colors only in color gamut of the device. When an image is transferred from one device to another device, because the device converts the image based on the color space of the device and displays RGB or CMYK, colors of the image may change on different devices.

RGB space is space in which a video signal is quantitatively represented by luma of red, green, and blue. YCC space is color space representing luma-chroma separation. Three components of a YCC space video signal respectively represent luma-chroma-chroma. Common YCC space video signals include YUV, YCbCr, ICtCp, and the like.

To obtain an image with a higher dynamic range, a bit width of the image is usually greater than or equal to 10 bits (bit). Common encoding standards that support HDR include H.266, H.265, and High Efficiency Image File Format (high efficiency image format, HEIF). The common Joint Photographic Experts Group (joint photographic experts group, JPEG) and H.264 support only 8-bit encoding, and therefore cannot well support HDR videos and HDR images.

An HDR image or an HDR video may need to be transcoded in a delivery or transmission process. In a current HDR transcoding scheme, the HDR image or the HDR video is directly transcoded. After the HDR image or the HDR video is decoded, HDR pixel values and an HDR format identifier and information are obtained. The HDR pixel values usually need to be processed (for example, processing such as image upsampling and downsampling and enhancement). The HDR format identifier and information, and processed HDR pixel values are then sent to an encoder for re-encoding. A re-encoded HDR image or HDR video is delivered to another device. This scheme (which may be referred to as a "single-layer transcoding scheme") in which an HDR image or an HDR video is directly transcoded may cause an exception in a transcoded HDR image or HDR video, affecting user experience. This is because when a single-layer encoded HDR bitstream is transcoded (decoded and then encoded), a transcoding system needs to correctly send all HDR information obtained by a decoder to the encoder. If the information is lost, the transcoding system fails to encode the information in a correct format. As a result, an incorrect bitstream is generated, and abnormal visual effect occurs when the user watches the content, severely affecting user experience. Currently, many delivery and transcoding systems in the market are not upgraded to support correct sending of HDR information from the decoder side to the encoder side. Mainstream mobile phone and application manufacturers have received many user complaints in this regard.

For ease of description, the term "HDR object" is used in some embodiments of this application. The HDR object may be a static HDR image (which may also be referred to as an HDR image, an HDR photo, an HDR picture, or the like), or may be an HDR video or another type of dynamic HDR image, or may be a frame of image in an HDR video or a dynamic HDR image.

It may be understood that, for ease of description, in some embodiments of this application, an HDR image is used as an example to describe the technical solutions of this application. However, it may be understood that these embodiments may be applied not only to HDR images, but also to other HDR objects, such as an HDR video, a dynamic HDR image, or a frame of image in an HDR video or a dynamic HDR image.

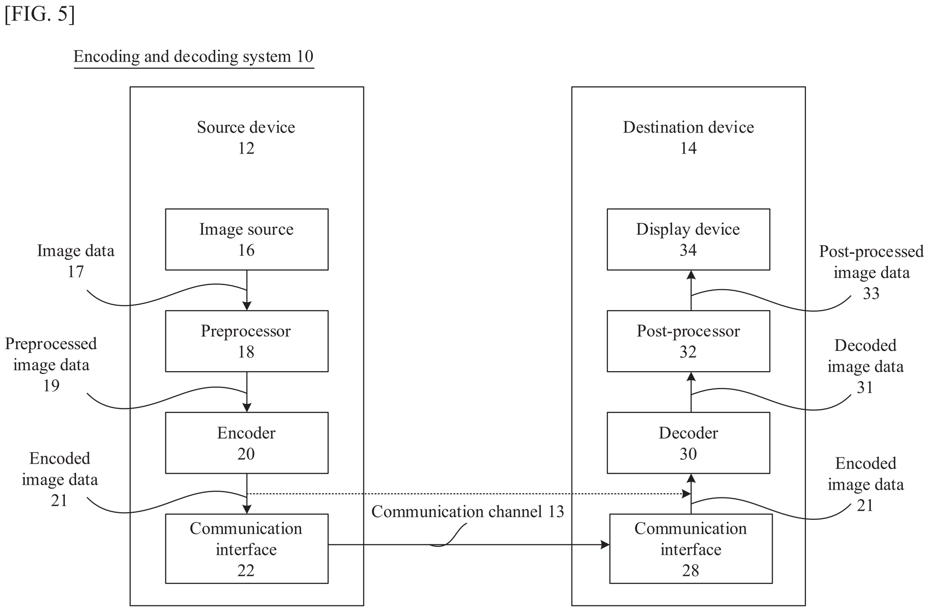

The following describes, with reference to FIG. 5, an encoding and decoding system to which this application is applied. FIG. 5 is a block diagram of an encoding and decoding system to which an embodiment of this application is applied, for example, a video encoding and decoding system 10 (or an encoding and decoding system 10 for short) to which a technology of this application may be applied. A video encoder 20 (or an encoder 20 for short) and a video decoder 30 (or a decoder 30 for short) of the video encoding and decoding system 10 represent devices that may be configured to execute technologies based on various examples described in this application.

As shown in FIG. 5, the encoding and decoding system 10 includes a source device 12. The source device 12 is configured to provide encoded data such as encoded image data 21 to a destination device 14 for decoding the encoded data.

The source device 12 includes an encoder 20. Optionally, the source device 12 may further include an image source 16, a preprocessor 18 (or a preprocessing unit), and a communication interface or a communication unit 22.

The image source 16 may include or be any type of image capture device for capturing a real-world image, and/or any type of image generation device, for example, a computer graphics processing unit for generating a computer animated image, or any type of device for obtaining and/or providing a real-world image, a computer generated image (for example, screen content, a virtual reality (virtual reality, VR) image, and/or any combination thereof (for example, an augmented reality (augmented reality, AR) image)). The image source may be any type of internal memory or memory storing any of the foregoing images.

To distinguish processing performed by the preprocessor 18 or the preprocessing unit 18, an image or image data 17 may also be referred to as a raw image or raw image data 17.

The preprocessor 18 is configured to: receive the (raw) image data 17 and perform preprocessing on the image data 17 to obtain preprocessed image data 19 or preprocessed image data 19. For example, preprocessing performed by the preprocessor 18 may include trimming, color format conversion (for example, from RGB to YCbCr), color correction, or denoising. It may be understood that the preprocessing unit 18 may be an optional component.

The video encoder 20 is configured to: receive the preprocessed image data 19 and provide the encoded image data 21.

The communication interface 22 in the source device 12 may be configured to: receive the encoded image data 21 and send the encoded image data 21 (or any further processed version thereof) over a communication channel 13 to another device, for example, the destination device 14 or any other device, for storage or reconstruction.

The destination device 14 includes the decoder 30 (for example, the video decoder 30), and may additionally, that is, optionally, include a communication interface or communication unit 28, a post-processor 32 (or post-processing unit 32), and a display device 34.

The communication interface 28 in the destination device 14 is configured to receive the encoded image data 21 (or any other processed version) directly from the source device 12 or any other source device such as a storage device. For example, the storage device is an encoded image data storage device, and provides the encoded image data 21 for the decoder 30.

The communication interface 22 and the communication interface 28 may be configured to send or receive the encoded image data 21 or encoded data over a direct communication link between the source device 12 and the destination device 14, for example, a direct wired or wireless connection, or over any type of network, for example, a wired or wireless network or any combination thereof, or any type of private and public network, or any type of combination thereof. For example, the communication interface 22 may be configured to: encapsulate the encoded image data 21 into an appropriate format such as a packet, and/or process the encoded image data by using any type of transmission encoding or processing for transmission over a communication link or communication network. The communication interface 28 corresponds to the communication interface 22 and may be, for example, configured to: receive the transmitted data and process the transmitted data by using any type of corresponding transmission decoding or processing and/or decapsulation, to obtain the encoded image data 21. The communication interface 22 and communication interface 28 each may be configured as a unidirectional communication interface indicated by an arrow of the corresponding communication channel 13 pointing from the source device 12 to the destination device 14 in FIG. 5, or a bidirectional communication interface; and may be configured to send and receive a message and the like, to establish a connection, confirm and exchange any other information related to the communication link and/or data transmission such as transmission of the encoded image data.

The decoder 30 is configured to: receive the encoded image data 21, and provide decoded image data 31 or a decoded image 31.

The post-processor 32 in the destination device 14 is configured to perform post-processing on the decoded image data 31 (also referred to as reconstructed image data), for example, the decoded image, to obtain post-processed image data 33, for example, a post-processed image. The post-processing performed by the post-processor 32 may include, for example, color format conversion (for example, from YCbCr to RGB), color correction, trimming, or re-sampling, or any other processing, for example, for generating the decoded image data 31 for display, for example, by the display device 34.

The display device 34 in the destination device 14 is configured to receive the post-processed image data 33, for displaying the image to a user, a watcher, or the like. The display device 34 may be or include any type of display for representing the reconstructed image, for example, an integrated or external display or monitor. For example, the display may include a liquid crystal display (liquid crystal display, LCD), an organic light emitting diode (organic light emitting diode, OLED) display, a plasma display, a projector, a micro LED display, a liquid crystal on silicon (liquid crystal on silicon, LCoS), a digital light processor (digital light processor, DLP), or any type of other display.

Although FIG. 5 shows the source device 12 and the destination device 14 as separate devices, device embodiments may alternatively include both the source device 12 and the destination device 14, or may include functions of both the source device 12 and the destination device 14, that is, may include both the source device 12 or a corresponding function and the destination device 14 or a corresponding function. In these embodiments, the source device 12 or the corresponding function and the destination device 14 or the corresponding function may be implemented by using same hardware and/or software or by using separate hardware and/or software or any combination thereof.

Based on the descriptions, existence and (accurate) division of different units or functions in the source device 12 and/or the destination device 14 shown in FIG. 5 may vary based on actual devices and application. This is apparent to a person skilled in the art.

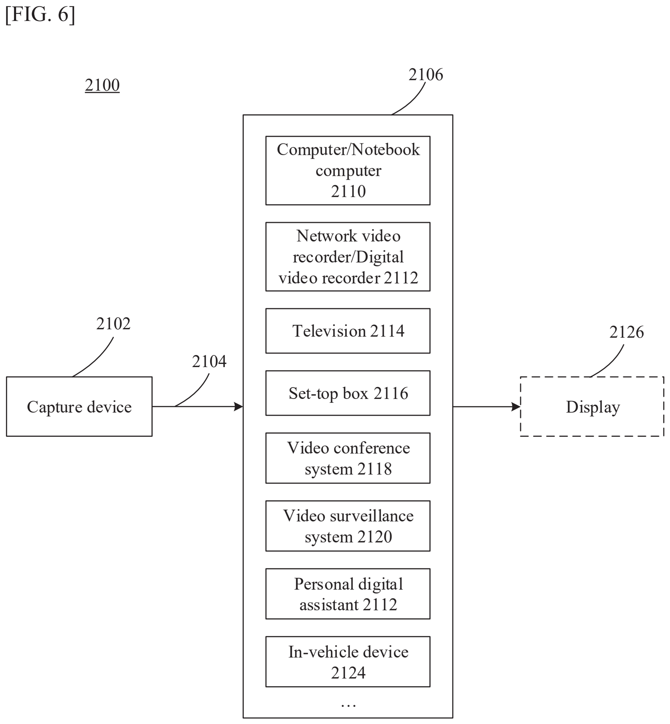

The following describes, with reference to FIG. 6, a content provider system for a content delivery service to which this application is applied. FIG. 6 is a block diagram of a content provider system for implementing a content delivery service to which an embodiment of this application is applied. The content provider system 2100 includes a capture device 2102, a terminal device 2106, and (optionally) a display 2126. The capture device 2102 communicates with the terminal device 2106 over a communication link 2104. The communication link may include the foregoing communication channel 13. The communication link 2104 may include but is not limited to Wi-Fi, Ethernet, wired, wireless (3G/4G/5G), USB, or any type of combination thereof, or the like.

The capture device 2102 may encode captured data by using the encoding method shown in this embodiment of this application. Alternatively, the capture device 2102 may deliver the captured data to a streaming server (not shown in the figure), and the server encodes the data and transmits encoded data to the terminal device 2106. The capture device 2102 includes but is not limited to a camera, a smartphone or a tablet computer, a computer or a notebook computer, a video conference system, a personal digital assistant (personal digital assistant, PDA), an in-vehicle device, or any combination thereof. In some embodiments, the capture device 2102 may include the foregoing source device 12.

The terminal device 2106 in the content provider system 2100 receives and regenerates decoded data. The terminal device 2106 may be a device with data receiving and restoration capabilities, such as a smartphone or a tablet computer, a computer/notebook computer 2110, a network video recorder (network video recorder, NVR)/digital video recorder (digital video recorder, DVR) 2112, a television 2114, a set-top box (set-top box, STB) 2116, a video conference system 2118, a video surveillance system 2120, a personal digital assistant 2122, an in-vehicle device 2124, or any combination thereof, or the like capable of decoding the encoded data. In some embodiments, the terminal device 2106 may include the foregoing destination device 14. The terminal device 2106 may decode the received data. In some embodiments, the terminal device 2106 may be a video play application, a streaming media play application, a streaming media play platform, a live streaming platform, or the like that runs on the terminal device.

For a terminal device with a display, for example, the smartphone or the tablet computer, the computer or the notebook computer 2110, the NVR/DVR 2112, the television 2114, the PDA 2122, or the in-vehicle device 2124, the terminal device may send the decoded data to the display of the terminal device. For a terminal device without a display, for example, the STB 2116, the video conference system 3118, or the video surveillance system 2120, the device is connected to the external display 2126, to receive and display the decoded data.

When each device in this system performs encoding or decoding, an image encoding device or an image decoding device shown in this embodiment of this application may be used.

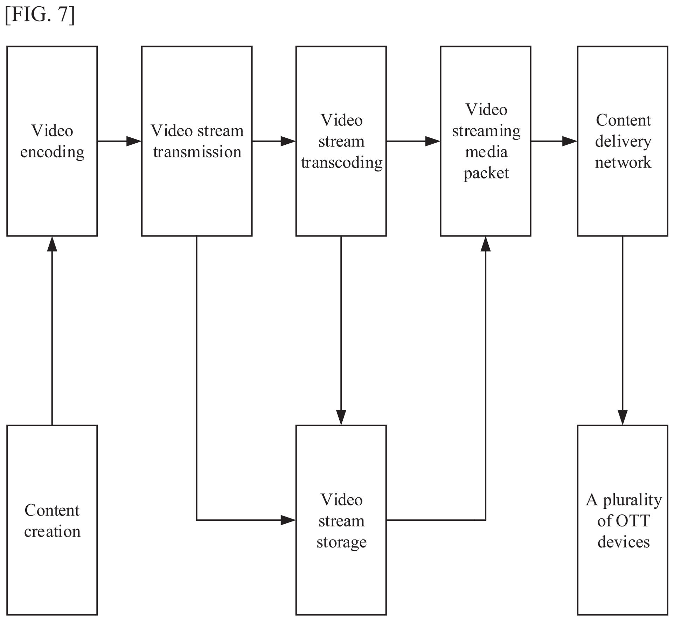

The following describes, with reference to FIG. 7, a streaming media system to which an embodiment of this application is applicable. FIG. 7 is a schematic flowchart of working of a streaming media system to which an embodiment of this application is applicable.

The streaming media system includes a content creation module, which generates required content data, for example, a video or audio. The streaming media system further includes a video encoding module, which encodes generated content by using an encoder. The streaming media system further includes a video stream transmission module, which transmits an encoded video in a form of a bitstream. Optionally, a format of a video stream may be converted into a bitstream format of a transport protocol commonly used by an OTT (over-the-top) device. For example, the protocol includes but is not limited to the Real-time Streaming Protocol (Real-time Streaming Protocol, RTSP), the Hypertext Transfer Protocol (Hypertext Transfer Protocol, HTTP), the HTTP Live Streaming (HTTP Live streaming protocol, HLS), the MPEG Dynamic Adaptive Streaming over HTTP (MPEG Dynamic Adaptive Streaming over HTTP, MPEG-DASH), the Real-time Transport Protocol (Real-time Transport protocol, RTP), the Real-Time Messaging Protocol (Real-Time Messaging Protocol, RTMP), or any combination thereof. Optionally, video stream storage may be performed to store an original format of the video stream and/or a plurality of converted bitstream formats, for ease of use. Further, the streaming media system further includes a video stream encapsulation module, configured to encapsulate the video stream to generate an encapsulated video stream. The encapsulated video stream may be referred to as a video streaming media packet. For example, the video streaming media packet may be generated based on a transcoded video stream or a stored video stream. Further, the streaming media system further includes a content delivery network (content delivery network, CDN), and the CDN is configured to deliver the video streaming media packet to a plurality of OTT devices, such as a mobile phone, a computer, a tablet computer, a home projector, or the like.

It should be noted that video encoding, video stream transmission, video stream transcoding, video stream storage, video streaming media packet generation, and the content delivery network may all be implemented on a cloud server.

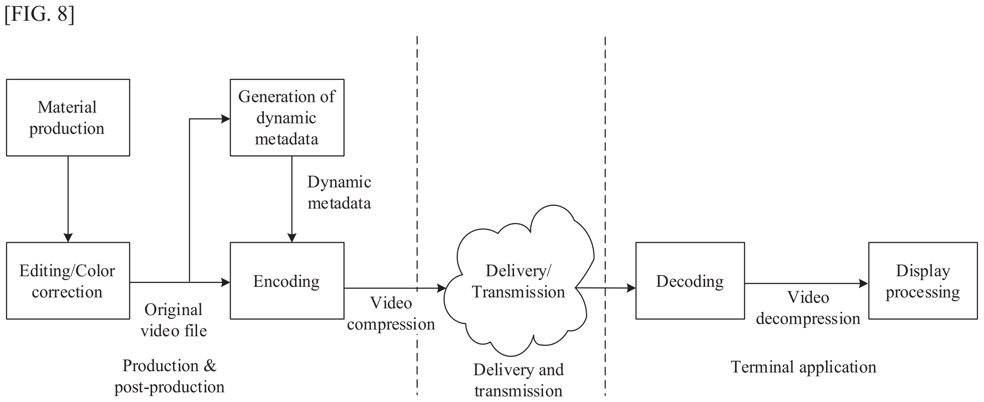

The following describes, with reference to FIG. 8, an example diagram of an end-to-end process according to this application.

As shown in FIG. 8, an original video file (which may also be referred to as a master file) is obtained through procedures such as material production (for example, shooting a video, making a computer graphics (computer graphics, CG) video, or the like), editing, and color correction. Then, corresponding dynamic metadata is obtained based on the original video file. After the original video file and the dynamic metadata are encoded, a compressed video is obtained. The compressed video is delivered/transmitted to a terminal device (for example, a computer, a set-top box, a mobile phone, or a tablet computer). The terminal device decodes the compressed video to obtain a decompressed video, and then displays the decompressed video to a user by using a display device (for example, a display or a television).

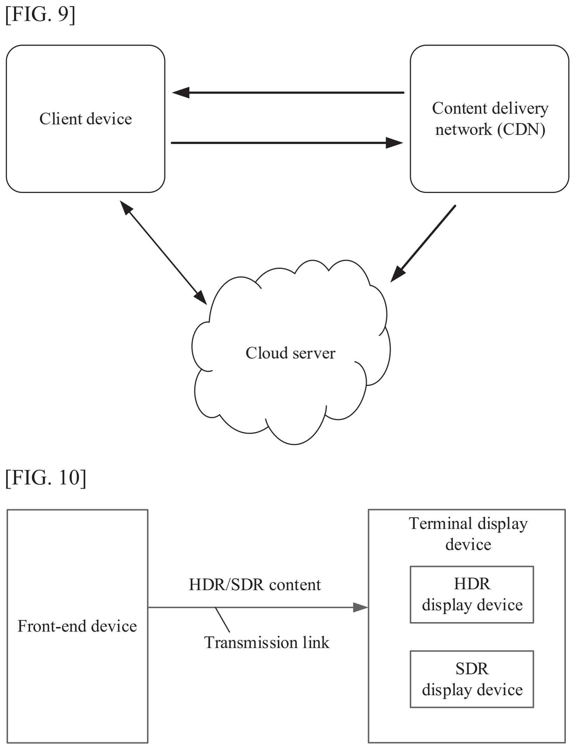

The following describes, with reference to FIG. 9, an example architecture of a streaming media system in this application. The architecture of the streaming media system includes a client device, a content delivery network, and a cloud server.

A user on the client device sends a play or playback request to the cloud platform.

The cloud platform makes a decision, responds to the client device, and sends an address of the requested content of the client on the CDN to the client device.

Then, based on the address, the client device requests the CDN to play the content, and the CDN provides the content for the client device, and finally completes the request of the client device.

The following describes, with reference to FIG. 10, a system architecture to which an embodiment of this application is applicable. FIG. 10 is a diagram of a possible system architecture to which an embodiment of this application is applicable. The system architecture in this embodiment of this application includes a front-end device, a transmission link, and a terminal display device.

The front-end device is configured to acquire or produce HDR/SDR content (for example, an HDR/SDR video or image).

In a possible embodiment, the front-end device may be further configured to extract corresponding metadata from the HDR content. The metadata may include global mapping information, local mapping information, and dynamic metadata and static metadata that correspond to the HDR content. The front-end device may send the HDR content and the metadata to the terminal display device over the transmission link. Specifically, the HDR content and the metadata may be transmitted in a form of one data packet, or separately transmitted in two data packets. This is not specifically limited in this embodiment of this application.

Optionally, the terminal display device may be configured to receive the metadata and the HDR content, obtain, based on the global mapping information and the local mapping information included in the corresponding metadata extracted from the HDR content, and information about the terminal display device, a mapping curve for global tone mapping and local tone mapping on the HDR content, convert the HDR content into display content adapted to an HDR display device or an SDR device in the terminal display device, and display the display content. It should be understood that, in different embodiments, the terminal display device may include a display device having a display capability with a lower dynamic range or a higher dynamic range than the HDR content generated by the front-end device. This is not limited in this application.

Optionally, in this application, the front-end device and the terminal display device may be independent and different physical devices. For example, the front-end device may be a video acquisition device, or may be a video production device. The video acquisition device may be a device such as a video camera, a camera, or an image drawing machine. The terminal display device may be a device with a video play function, such as virtual reality (virtual reality, VR) glasses, a mobile phone, a tablet computer, a television, or a projector.

Optionally, the transmission link between the front-end device and the terminal display device may be a wireless connection or a wired connection. The wireless connection may use technologies such as long term evolution (long term evolution, LTE), 5th generation (5th generation, 5G) mobile communication, and future mobile communication. The wireless connection may further include technologies such as wireless-fidelity (wireless-fidelity, Wi-Fi), Bluetooth, and near field communication (near field communication, NFC). The wired connection may include an Ethernet connection, a local area network connection, and the like. This is not specifically limited.

In this application, functions of the front-end device and functions of the terminal display device may be alternatively integrated into a same physical device, for example, a terminal device having a video shooting function, like a mobile phone or a tablet. In this application, some of the functions of the front-end device and some of the functions of the terminal display device may be alternatively integrated into a same physical device. This is not specifically limited.

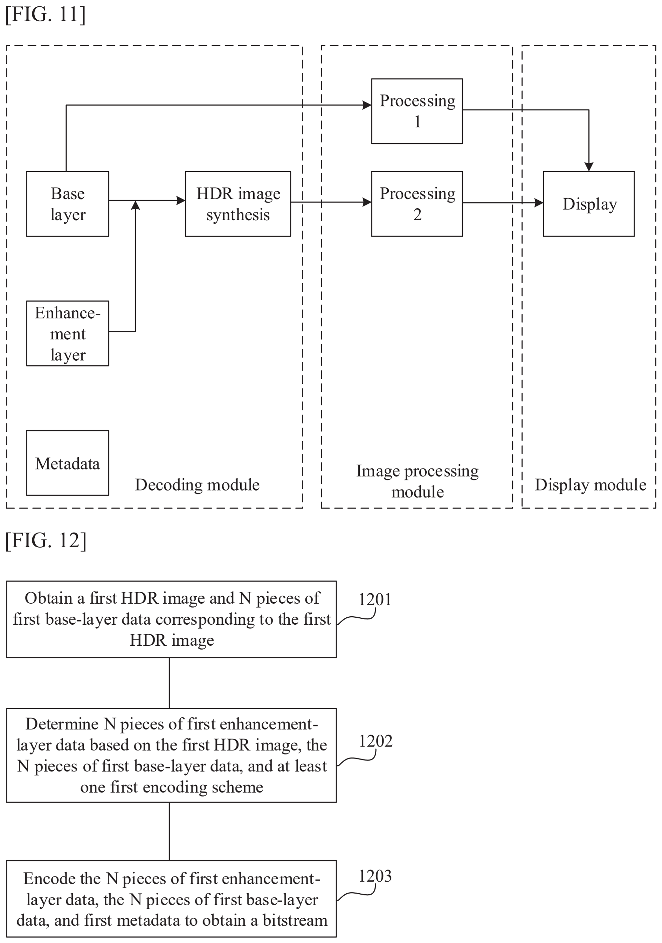

FIG. 11 is a diagram of a digital signal processing method according to an embodiment of this application. As shown in FIG. 11, the digital signal processing method provided in this embodiment of this application may be applied to a decoder side.

A decoding module (which may also be referred to as a decoder) may obtain base-layer data, enhancement-layer data, and metadata from a received bitstream. Then, the decoding module may synthesize the base-layer data and the enhancement-layer data to obtain an HDR image.

A graphics processing module may process the HDR image, and then send a processed HDR image to a display module. The graphics processing module may further process the base-layer data, and then send processed base-layer data to the display module. The graphics processing module may further process the base-layer data and the HDR image, and then the graphics processing module may send the processed HDR image and the processed base-layer data to the display module.

The display module may present the HDR image based on the received data (for example, the processed HDR image, or the processed HDR image and the processed base-layer data).

For ease of description, the HDR image obtained by the decoding module based on the base-layer data and the enhancement-layer data may be referred to as an HDR image 1, the HDR image obtained after the graphics processing module processes the HDR image 1 may be referred to as an HDR image 2, and the HDR image displayed by the display module may be referred to as an HDR image 3.

The base-layer data may also be referred to as a base-layer image, a base image, or a basic image, and may be an SDR image or an HDR image with a low dynamic range.

The enhancement-layer data may also be referred to as enhanced data, an enhancement-layer image, or an enhanced image, and may include detail information of some images. In this way, the base-layer data is supplemented by using the image detail information included in the enhancement-layer data, to synthesize an HDR image with a better contrast (that is, the HDR image 1 mentioned above).

A dynamic range of the base-layer data is less than a dynamic range of the HDR image (that is, the HDR image 1) determined based on the base-layer data and the enhancement-layer data.

For example, in some embodiments, the base-layer data may be an SDR image, and the HDR image 1 is an HDR image.

For another example, in some other embodiments, the base-layer data may be an HDR image, but a dynamic range of the HDR image is less than the dynamic range of the HDR image 1.

For example, it is assumed that the dynamic range of the base-layer data is $DR_{x1}$ to $DR_{x2}$, and the dynamic range of the HDR image 1 is $DR_{y1}$ to $DR_{y2}$. In some embodiments, $DR_{y1}$ is less than $DR_{x1}$, and $DR_{y2}$ is greater than $DR_{x2}$. In some other embodiments, $DR_{y1}$ is less than $DR_{x1}$, and $DR_{y2}$ is equal to $DR_{x2}$. In some other embodiments, $DR_{y1}$ is equal to $DR_{x1}$, and $DR_{y2}$ is greater than $DR_{x2}$. In other words, it may be considered that the base-layer data is an image whose dynamic range is less than that of the HDR image 1.

FIG. 12 is a schematic flowchart of an encoding method according to an embodiment of this application. The method shown in FIG. 12 may be performed by an electronic device or a component (for example, a chip or a system on chip (system on chip, SoC)) in the electronic device. The electronic device may be the source device 12 shown in FIG. 5, the capture device 2102 shown in FIG. 6, or the front-end device shown in FIG. 10. For ease of description, in the following embodiment, it is assumed that the method shown in FIG. 12 is performed by the electronic device.

1201: Obtain a first HDR image and N pieces of first base-layer data corresponding to the first HDR image.

The first HDR image may be directly acquired by using a camera of the device, or may be obtained by synthesizing a plurality of low dynamic range images with different exposure values. A manner of obtaining the first HDR image is not limited in this embodiment of this application. A data format of the first HDR image is not limited in this embodiment of this application either. In terms of color space, the color space of the first HDR image may be YUV, or RGB. In terms of a bit width of data, the bit width of the first HDR image may be 8 bits, 10 bits, 12 bits, or the like. An optical-electro transfer feature of the first HDR image may be PQ, gamma, log, HLG, or the like.

The first base-layer data may also be referred to as first base-layer image data. The first base-layer data corresponds to the first HDR image.

In some embodiments, the camera may simultaneously acquire the first HDR image and the corresponding base-layer image data.

In some other embodiments, the corresponding base-layer image data may be obtained by processing the first HDR image. For example, the first HDR image is acquired by the camera or is obtained by synthesizing a plurality of SDR images. In this case, tone mapping, neutral network processing, and the like are performed on the first HDR image, to obtain base-layer image data corresponding to the first HDR image.

For ease of description, acquiring the base-layer image data corresponding to the first HDR image by using the camera may be referred to as a base layer acquisition scheme 1, and processing the first HDR image to obtain the base-layer image data corresponding to the first HDR image may be referred to as a base layer acquisition scheme 2. It may be understood that, the base layer acquisition scheme 1 and the base layer acquisition scheme 2 are merely examples of an acquisition scheme for obtaining the base-layer image data, rather than a limitation on the base-layer image data acquisition scheme. For ease of description, the base-layer image data obtained through acquisition schemes such as the base layer acquisition scheme 1 and the base layer acquisition scheme 2 may be referred to as reference base-layer data.

In some embodiments, the reference base-layer data may be directly used as the first base-layer data.

In some other embodiments, the first base-layer data may be obtained after the reference base-layer data is processed. A specific process of determining the first base-layer data based on the reference base-layer data is similar to a process of determining first enhancement-layer data based on intermediate enhanced data. For example, the reference base-layer data may be encoded by using an encoding scheme such as PQ encoding, HLG encoding, gamma encoding, log encoding, or any curve encoding, to obtain the first base-layer data. For a specific determining method, refer to descriptions in the following embodiment. It may be understood that, when the first base-layer data is obtained after the reference base-layer data is encoded, the first metadata may further carry an encoding scheme used to decode the first base-layer data and/or an encoding scheme used to encode the first base layer data.

Similarly, a format of the first base-layer data is not limited in this embodiment of this application. For example, color space of the first base-layer data may be YUV or RGB. A bit width of the first base-layer data may be 8 bits, 10 bits, 12 bits, or the like. An optical-electro transfer feature of the first base-layer data may be PQ, gamma, log, HLG, or the like.

N is a positive integer greater than or equal to 1. In other words, in some embodiments, one first HDR image and one piece of first base-layer data may be obtained. In some other embodiments, one first HDR image and a plurality of pieces of first base-layer data may be obtained.

1202: Determine N pieces of first enhancement-layer data based on the first HDR image, the N pieces of first base-layer data, and at least one first encoding scheme.

As described above, N is a positive integer greater than or equal to 1. A quantity of pieces of the first enhancement-layer data is the same as a quantity of pieces of the first base-layer data. For example, if one first HDR image and one piece of first base-layer data are obtained in step 1201, one piece of first enhancement-layer data may be determined based on the obtained one first HDR image, one piece of first base-layer data, and at least one first encoding scheme. If one first HDR image and a plurality of (for example, two) pieces of base-layer data are obtained in step 1201, a plurality of pieces of first enhancement-layer data may be determined based on the obtained one first HDR image, two pieces of base-layer data, and at least one encoding scheme.

1203: Encode the N pieces of first enhancement-layer data, the N pieces of first base-layer data, and first metadata to obtain a bitstream.

The first metadata includes first indication information, and the first indication information indicates the at least one encoding scheme or a decoding scheme corresponding to the at least one encoding scheme. A decoding device may decode the received encoded data according to the first indication information. Therefore, in some embodiments, the first indication information may also be referred to as decoding indication information.

In some embodiments, N pieces of intermediate enhanced data may be first determined, and then the N pieces of first enhancement-layer data are determined based on the N pieces of intermediate enhanced data.

In some embodiments, the N pieces of intermediate enhanced data may be determined based on the first HDR image and the N pieces of first base-layer data.

In some other embodiments, N pieces of data may be first determined based on the first HDR image and the N pieces of first base-layer data, and then the N pieces of data are processed to obtain the N pieces of intermediate enhanced data. For ease of description, the N pieces of data may be referred to as N pieces of reference intermediate enhanced data. In other words, in some embodiments, the N pieces of intermediate enhanced data are N pieces of reference intermediate enhanced data. In some other embodiments, the N pieces of intermediate enhanced data are in a one-to-one correspondence with the N pieces of reference intermediate enhanced data, and each piece of intermediate enhanced data in the N pieces of intermediate enhanced data is determined based on the corresponding reference intermediate enhanced data.

How to determine the reference intermediate enhanced data is first described.

In some embodiments, the first HDR image may have one piece of first base-layer data (that is, N is equal to 1). In this case, one piece of reference intermediate enhanced data may be determined based on the first HDR image and the first base-layer data. For ease of description, HDRα[j] is used to represent a value of a $j^{th}$ pixel in the first HDR image, baseα[j] is used to represent a value of a $j^{th}$ pixel in the first base-layer data, and Enhanceα[j] is used to represent a value of a $j^{th}$ pixel in the reference intermediate enhanced data. In this case, in some embodiments, HDRα[j], baseα[j], and Enhanceα[j] meet the following relationship:

$$\text{Enhance}\alpha[j] = \text{HDR}\alpha[j]/f(\text{base}\alpha[j]), \quad \text{(formula 2.1)}.$$

In some other embodiments, HDRα[j], baseα[j], and Enhanceα[j] meet the following relationship:

$$\text{Enhance}\alpha[j] = \text{HDR}\alpha[j] - f(\text{base}\alpha[j]), \quad \text{(formula 2.2)}.$$

f( ) in formula 2.1 and formula 2.2 may be a default transformation function, or may be a transformation function specified by metadata. This is not limited in this embodiment of this application. In addition, an analytic expression of the transformation function is not limited in this embodiment of this application. For example, in some embodiments, f(baseα[j])=baseα[j]. For another example, in some other embodiments, f(baseα[j])=A×baseα[j], where the parameter A may be a preset value or a value determined based on baseα[j]. For another example, in some other embodiments, f(baseα[j])=baseα[j]+B, and the parameter B may be a preset value or a value determined based on baseα[j].

In some other embodiments, the first HDR image may have a plurality of pieces of first base-layer data (that is, N is a positive integer greater than or equal to 2). In this case, a plurality of pieces of reference intermediate enhanced data may be determined based on the first HDR image and the plurality of pieces of first base-layer data. For ease of description, HDRα[j] is used to represent a value of a $j^{th}$ pixel in the first HDR image, base$_i$[j] is used to represent a value of a $j^{th}$ pixel in an $i^{th}$ piece of first base-layer data in the plurality of pieces of first base-layer data, and Enhanceα$_i$[j] is used to represent a value of a $j^{th}$ pixel in an $i^{th}$ piece of intermediate enhanced data in the plurality of pieces of reference intermediate enhanced data, where i is a positive integer greater than or equal to 1 and less than or equal to N, that is, i=1, ..., N. HDRα[j], baseα$_i$[j], and Enhanceα$_i$[j] may meet the foregoing formula 2.1 or formula 2.2. In other words, in some embodiments, HDRα[j], baseα$_i$[j], and Enhanceα$_i$[j] meet the following relationship:

$$\text{Enhance}\alpha_i[j]=\text{HDR}\alpha[j]/f(\text{base}\alpha_i[j]), \text{ (formula 2.3)}.$$

In some other embodiments, $\text{HDR}\alpha[j]$, $\text{base}\alpha_i[j]$, and $\text{Enhance}\alpha_i[j]$ meet the following relationship:

$$\text{Enhance}\alpha_i[j]=\text{HDR}\alpha[j]-f(\text{base}\alpha_i[j]), \text{ (formula 2.4)}.$$

For the description of f( ), refer to a scenario in which N is equal to 1. Details are not described herein again.

As described above, in some embodiments, the reference intermediate enhanced data is equal to the intermediate enhanced data. In this case, determining the N pieces of reference intermediate enhanced data is actually equivalent to determining the N pieces of intermediate enhanced data. Therefore, the N pieces of first enhancement-layer data may be determined directly based on the N pieces of reference intermediate enhanced data. A method for determining the N pieces of first enhancement-layer data based on the N pieces of reference intermediate enhanced data is the same as a method for determining the N pieces of first enhancement-layer data based on the N pieces of intermediate enhanced data.

The following describes how to determine the intermediate enhanced data based on the reference intermediate enhanced data.

In some embodiments, a value range of the reference intermediate enhanced data may be obtained. For example, a minimum value and/or a maximum value of the reference intermediate enhanced data may be obtained. Then, the reference intermediate enhanced data is mapped based on the obtained data, to obtain the intermediate enhanced data. For example, the minimum value may be mapped to a first preset value, and/or the maximum value may be mapped to a second preset value. Then, based on a mapping relationship of the minimum value and/or the maximum value, other values of the reference intermediate enhanced data are mapped, to obtain the intermediate enhanced data. The first preset value is different from the second preset value. The first preset value may be less than the second preset value. For example, the first preset value is 0, and the second preset value is 1.

In some other embodiments, a histogram of the reference intermediate enhanced data may be obtained, and then a mapping relationship TME( ) is obtained by using a histogram equalization method. The intermediate enhanced data is determined based on the mapping relationship. If $\text{Enhance}\alpha[j]$ is used to represent a value of a $j^{th}$ pixel in the reference intermediate enhanced data, and $\text{EnhanceAfter}\alpha[j]$ is used to represent a value of a $j^{th}$ pixel in the intermediate enhanced data, in some embodiments, $\text{Enhance}\alpha[j]$ and $\text{EnhanceAfter}\alpha[j]$ meet the following relationship:

$$\text{EnhanceAfter}\alpha[j]=\text{TME}(\text{Enhance}\alpha[j]), \text{ (formula 3.1)}.$$

In some other embodiments, $\text{Enhance}\alpha[j]$ and $\text{EnhanceAfter}\alpha[j]$ meet the following relationship:

$$\text{EnhanceAfter}\alpha[j]=\text{TME}( )\times\text{Enhance}\alpha[j], \text{ (formula 3.2)}.$$

In some embodiments, the reference intermediate enhanced data may be multi-channel data. In this case, single-channel data may be determined based on the multi-channel data, to obtain the intermediate enhanced data.

In some embodiments, the intermediate enhanced data may be data of one channel of corresponding reference intermediate enhanced data. For example, assuming that the reference intermediate enhanced data includes data of three channels (R channel data, G channel data, and B channel data), the corresponding intermediate enhanced data may be data of one channel in the three channels. For example, the intermediate enhanced data may be the R channel data. In other words, the reference intermediate data and the intermediate enhanced data meet the following relationship:

$$\text{EnhanceAfter[Single-Channel]}=\text{Enhance[Channel 1/2/.../P]}, \text{ (formula 4.1)}$$

EnhanceAfter[Single-Channel] represents the intermediate enhanced data, Enhance[Channel 1/2/.../P] represents data of one channel of channel 1/2/.../P in the reference intermediate enhanced data, and P is a positive integer greater than or equal to 2.

In some other embodiments, the multi-channel data of the reference intermediate enhanced data may be transformed separately, to obtain a plurality of transformation results, and one of the transformation results is determined as the intermediate enhanced data corresponding to the reference intermediate enhanced data. For example, assuming that the reference intermediate enhanced data includes data of three channels (R channel data, G channel data, and B channel data), the reference intermediate enhanced data may be transformed by using a transformation function, to obtain transformed reference intermediate enhanced data. Then, a value of one channel in the transformed reference intermediate enhanced data is selected as the intermediate enhanced data. A relationship between the first intermediate enhanced data, the second intermediate enhanced data, and the reference intermediate enhanced data may be represented by using a formula 4.2 and a formula 4.3:

$$\text{Enhance2[Multi-Channel]=f(Enhance[Multi-Channel]), (formula 4.2)}$$

$$\text{EnhanceAfter[Single-Channel]=Enhance2[Channel 1/.../P], (formula 4.3)}$$

Enhance2[Multi-Channel] represents the transformed reference intermediate enhanced data, f( ) represents the transformation function, Enhance[Multi-Channel] represents the reference intermediate enhanced data, EnhanceAfter [Single-Channel] represents the intermediate enhanced data, Enhance2[Channel 1/.../P] represents data of one channel in a channel 1 to a channel P in the transformed reference intermediate enhanced data, and P is a positive integer greater than or equal to 2.

In some embodiments, the reference intermediate enhanced data may be determined based on a function relationship and the reference intermediate enhanced data.

In some embodiments, the intermediate enhanced data includes values of a plurality of pixels, each pixel in the plurality of pixels corresponds to a plurality of groups of pixels, the plurality of groups of pixels respectively belong to the multi-channel data of the corresponding reference intermediate enhanced data, each group of pixels in the plurality of groups of pixels include at least one pixel, and a pixel value of each pixel in the plurality of pixels is determined based on pixel values of the corresponding plurality of groups of pixels and the function relationship.

For example, it is assumed that the reference intermediate enhanced data includes data of three channels, and a pixel k is a $k^{th}$ pixel in the intermediate data. In this case, the pixel k has three groups of corresponding pixels, and the three groups of pixels are in a one-to-one correspondence with the three channels. If a size of the reference intermediate enhanced data is the same as a size of the reference intermediate data, each group of pixels in the three groups of pixels includes one pixel value. In other words, the three groups of pixels include three pixel values in total, and the three pixel values respectively belong to the three groups of pixels. The three pixel values are respectively pixel values of the $k^{th}$ pixel of the reference intermediate enhanced data in the three channels. A pixel value of the pixel k may be determined based on the three pixel values and the function relationship. The pixel value of the pixel k and the three pixel values may be represented by using the following relationship:

$$\text{EnhanceAftef}_k\text{[Single-Channel]=C(Enhance}_k\text{[Channel  1], Enhance}_k\text{[Channel2], Enhance}_k\text{[Channel3]),} \quad \text{(formula 5.1)}$$

EnhanceAfter$_k$[Single-Channel] represents the pixel value of the pixel k, Enhance$_k$[Channel 1] represents the pixel value of the $k^{th}$ pixel of the reference intermediate enhanced data in the channel 1, Enhance$_k$[Channel 2] represents the pixel value of the $k^{th}$ pixel of the reference intermediate enhanced data in the channel 2, Enhance$_k$[Channel 3] represents the pixel value of the $k^{th}$ pixel of the reference intermediate enhanced data in the channel 3, and C( ) represents the function relationship.

In some embodiments, the function relationship may be obtaining all element eigenvalues, for example, a maximum value, a minimum value, an average value, and a variance. In some other embodiments, the function relationship may be transforming or combining the foregoing eigenvalues, for example, performing weighted summation.

In some embodiments, some intermediate enhanced data in the N pieces of intermediate enhanced data may be determined based on the corresponding reference intermediate enhanced data, and the other intermediate enhanced data may directly use the corresponding reference intermediate enhanced data.

After the N pieces of intermediate enhanced data are determined, the N pieces of first enhancement-layer data may be determined based on the N pieces of intermediate enhanced data. The N pieces of first enhancement-layer data may be obtained by encoding the N pieces of intermediate enhanced data.

In some embodiments, the at least one encoding scheme may be used to encode the N pieces of intermediate enhanced data, to obtain the N pieces of first enhancement-layer data. The N pieces of first enhancement-layer data are in a one-to-one correspondence with the N pieces of intermediate enhanced data, and each piece of first enhancement-layer data is a result obtained after the corresponding intermediate enhanced data is encoded.

In some embodiments, the at least one encoding scheme may include only one encoding scheme. In this case, the N pieces of intermediate enhanced data may be encoded separately by using the encoding scheme, to obtain the N pieces of first enhancement-layer data.

In some other embodiments, a quantity of encoding schemes is the same as a quantity of pieces of the intermediate enhanced data. In other words, there may be N encoding schemes. The N encoding schemes are in a one-to-one correspondence with the N pieces of intermediate enhanced data. Each encoding scheme is used to encode the corresponding intermediate enhanced data, to obtain the first enhancement-layer data. In other words, the $i^{th}$ piece of intermediate enhanced data in the N pieces of intermediate enhanced data may be encoded by using an $i^{th}$ encoding scheme in the N encoding schemes, to obtain an $i^{th}$ piece of first enhancement-layer data in the N pieces of first enhancement-layer data, where i=1, ..., N.

In some other embodiments, the quantity of encoding schemes may be less than the quantity of pieces of the intermediate enhanced data. In this case, a plurality of pieces of intermediate enhanced data may use a same encoding scheme.

If N is equal to 1, the N encoding schemes may be any one of the following encoding schemes: PQ encoding, HLG encoding, gamma encoding, log encoding, or any curve encoding.

If N is a positive integer greater than or equal to 2, the N encoding schemes may be one or more of the foregoing encoding schemes (that is, PQ encoding, HLG encoding, gamma encoding, log encoding, and any curve encoding). For example, if N is equal to 2, the two encoding schemes may be PQ encoding and log encoding, respectively. For another example, if N is equal to 2, the two encoding schemes may both be log encoding, and parameters of the two encoding schemes are different. For example, one of the two encoding schemes is log encoding with a base of 2, and the other is log encoding with a base of 3.

In some embodiments, the encoding scheme and a specific parameter (for example, a base in log encoding) used in the encoding scheme may be preset.

In some other embodiments, the encoding scheme may be determined by an encoding side. In this case, the used encoding scheme may be indicated to a decoder side by using the first indication information, so that the decoder side selects a corresponding decoding scheme to decode the received bitstream; or the decoding scheme may be indicated to the decoder side by using the first indication information, so that the decoder side can directly decode the received bitstream by using the decoding scheme indicated by the first indication information.

For example, in some embodiments, the first indication information indicates at least one decoding scheme, and the at least one decoding scheme is in a one-to-one correspondence with the at least one encoding scheme. Each decoding scheme in the at least one decoding scheme is used to decode data obtained through encoding by using a corresponding encoding scheme.

For another example, in some embodiments, the first indication information indicates at least one decoding function and a decoding parameter of each decoding function in the at least one decoding function. The at least one decoding function is in a one-to-one correspondence with the at least one encoding scheme. An $i^{th}$ decoding function in the at least one decoding function is used to decode the $i^{th}$ piece of first enhancement-layer data in the at least one piece of first enhancement-layer data.

In some embodiments, the encoding scheme may be any function curve. In this case, compression encoding may be performed on the intermediate enhanced data by using a function curve. In some embodiments, compression encoding may be performed on different intermediate enhanced data by using different curve forms and parameters. In some other embodiments, compression encoding may be performed on different intermediate enhanced data by using a same curve form and parameter. The first indication information may indicate a curve form and a parameter that are used to compress the intermediate enhanced data.

In some embodiments, the encoding scheme may be a logarithm (log) or an exponential function. Using the logarithmic function as an example, the logarithmic function may be used to perform compression encoding on the intermediate enhanced data, to obtain the first enhancement-layer data.

In some embodiments, a parameter (for example, a base of a logarithmic function) of a function used for compression encoding is preset or pre-negotiated. In this case, the first metadata indicates a type of the function used for compression encoding. For example, the type of the function used for compression encoding may be indicated as a logarithm function or an exponential function.

In some other embodiments, the parameter of the function used for compression encoding is determined during compression. In this case, the first metadata may indicate the function used for compression encoding and a parameter used for the function.

In some other embodiments, the function used for compression encoding and the parameter of the function may both be preset or pre-negotiated.

In some embodiments, one piece of intermediate enhanced data may be divided into a plurality of regions, and then the plurality of regions are encoded respectively by using a plurality of encoding schemes.

In some embodiments, if N is a positive integer greater than or equal to 2, each piece of intermediate enhanced data in the N pieces of intermediate enhanced data may be divided into a plurality of regions.

In some other embodiments, if N is a positive integer greater than or equal to 2, some intermediate enhanced data in the N pieces of intermediate enhanced data may be divided into a plurality of regions, and remaining intermediate enhanced data is not divided. The undivided intermediate enhanced data may be encoded with reference to the foregoing scheme to obtain the corresponding first enhancement-layer data.

For ease of description, the following is described by using an example in which each piece of intermediate enhanced data is divided.

It is assumed that the $i^{th}$ piece of intermediate enhanced data in the N pieces of intermediate enhanced data may be divided into $N_i$ regions. The $N_i$ regions are encoded respectively by using $N_i$ encoding schemes, to obtain the $i^{th}$ piece of first enhancement-layer data in the N pieces of first enhancement-layer data, where the $i^{th}$ piece of first enhancement-layer data includes $N_i$ encoded regions. For ease of description, a region before encoding may be referred to as a first region, and a region after encoding may be referred to as a second region. In other words, the $i^{th}$ piece of intermediate enhanced data may be divided into $N_i$ first regions, and the $i^{th}$ piece of first enhancement-layer data includes $N_i$ second regions. The $N_i$ first regions are encoded respectively by using the $N_i$ encoding schemes, to obtain the $N_i$ second regions. In other words, a $j^{th}$ second region in the $N_i$ second regions is obtained after the $N_i$ first regions are encoded by using a $j^{th}$ encoding scheme in the $N_i$ encoding schemes. $N_i$ is a positive integer greater than or equal to 2.

For example, assuming that N=3, the $1^{st}$ piece of intermediate enhanced data may be divided into $N_i$ first regions. The $N_i$ first regions are encoded by using $N_1$ encoding schemes, to obtain $N_1$ second regions. The $1^{st}$ piece of first enhancement-layer data includes the $N_1$ second regions. Similarly, the $2^{nd}$ piece of intermediate enhanced data may be divided into $N_2$ first regions. The $N_2$ first regions are encoded by using $N_2$ encoding schemes, to obtain $N_2$ second regions. The $2^{nd}$ piece of first enhancement-layer data includes the $N_2$ second regions. The $3^{rd}$ piece of intermediate enhanced data may be divided into $N_3$ first regions. The $N_3$ first regions are encoded by using $N_3$ encoding schemes, to obtain $N_3$ second regions. The $3^{rd}$ piece of first enhancement-layer data includes the $N_3$ second regions.

In some embodiments, any two pieces of intermediate enhanced data may be divided into a same quantity of regions. Still using N=3 as an example, in this case, $N_1=N_2=N_3$.

In some embodiments, any two pieces of intermediate enhanced data may be divided into a same quantity of regions or different quantities of regions. Still using N=3 as an example, in this case, a relationship between Ni, $N_2$, and $N_3$ may be any one of the following: $N_1=N_2\neq N_3$, $N_1\neq N_2=N_3$, and $N_1\neq N_2\neq N_3$.

In some embodiments, any two encoding schemes in the $N_i$ encoding schemes may be different encoding schemes. For example, it is assumed that an encoding scheme 1 and an encoding scheme 2 are two encoding schemes in the $N_i$ encoding schemes, the encoding scheme 1 is used to perform encoding by using a function curve, and the encoding scheme 2 is used to perform encoding by using a logarithmic function.

In some other embodiments, any two encoding schemes in the $N_i$ encoding schemes may be same encoding schemes but have different parameters. For example, it is assumed that the encoding scheme 1 and the encoding scheme 2 are two encoding schemes in the $N_i$ encoding schemes. Both the encoding scheme 1 and the encoding scheme 2 are used to perform encoding by using logarithmic functions, but a base of the encoding scheme 1 is 2, and a base of the encoding scheme 2 is 3.

In some other embodiments, any two encoding schemes in the $N_i$ encoding schemes may be same encoding schemes and have same parameters. For example, it is assumed that the encoding scheme 1 and the encoding scheme 2 are two encoding schemes in the $N_i$ encoding schemes. Both the encoding scheme 1 and the encoding scheme 2 are used to perform encoding by using logarithmic functions, and a base of the encoding scheme 1 and a base of the encoding scheme 2 are both 2. In this case, the $N_i$ encoding schemes may also be considered as one encoding scheme.

In some embodiments, the first indication information may indicate M groups of encoding schemes. Each group of encoding schemes in the M groups of encoding schemes correspond to one or more of the N pieces of intermediate enhanced data. One group of encoding schemes in the $i^{th}$ piece of intermediate enhanced data in the corresponding N pieces of intermediate enhanced data include the $N_i$ encoding schemes. The $N_i$ encoding schemes may be respectively used to encode the $N_i$ regions in the $i^{th}$ piece of intermediate enhanced data, to obtain the $i^{th}$ piece of first enhancement-layer data of the N pieces of first enhancement-layer data. M may be a positive integer greater than 1.

If M is equal to N, the first indication information may indicate N groups of encoding schemes. The N groups of encoding schemes are in a one-to-one correspondence with the N pieces of intermediate enhanced data. An $i^{th}$ group of encoding schemes in the N groups of encoding schemes include the $N_i$ encoding schemes. The $N_i$ encoding schemes are respectively used to encode the $N_i$ regions in the $i^{th}$ piece of intermediate enhanced data.

In the foregoing embodiment, the first indication information indicates the encoding scheme. The decoding device may determine a corresponding decoding scheme based on the encoding scheme. Correspondingly, in some other embodiments, the first indication information may directly indicate the decoding scheme. In this way, the decoding device may directly decode corresponding data based on the decoding scheme indicated by the first indication information. For example, the first indication information may indicate M groups of decoding schemes. Each group of decoding schemes in the M groups of decoding schemes correspond to one or more of the N pieces of first enhancement layer data. One group of decoding schemes in the $i^{th}$ piece of first enhancement-layer data in the corresponding N pieces of first enhancement-layer data include $N_i$ decoding schemes. The $N_i$ decoding schemes may be respectively used to encode the $N_i$ regions in the $i^{th}$ piece of first enhancement-layer data.

If M is equal to N, the first indication information may indicate N groups of decoding schemes, an $i^{th}$ group of decoding schemes in the N groups of decoding schemes include $N_i$ decoding schemes, and the $N_i$ decoding schemes are in a one-to-one correspondence with the $N_i$ encoding schemes. The $N_i$ decoding schemes are respectively used to decode the $N_i$ regions in the $i^{th}$ piece of first enhancement-layer data.

In some embodiments, the intermediate enhanced data is not processed and/or encoded, and the intermediate enhanced data is directly used as the first enhancement-layer data.

It should be noted that the first enhancement-layer data, the intermediate enhanced data, and the reference intermediate enhanced data are not limited in any domain, and may be in a linear domain, a PQ domain, a log domain, or the like. Color space of the first enhancement-layer data, the intermediate enhanced data, and the reference intermediate enhanced data is not limited in this application either, and may be color space such as YUV, RGB, Lab, or HSV.

In addition, before and/or after the intermediate enhanced data and/or the first enhancement-layer data are/is determined, or after the intermediate enhanced data is determined, color gamut mapping may be performed, so that data is converted from a current color gamut to a target color gamut. Then, data of the target color gamut is processed. The current color gamut and the target color gamut include but are not limited to BT.2020, BT.709, DCI-P3, sRGB, and the like.

A codec is not limited in this embodiment of this application. For example, a codec using technologies such as versatile video coding (versatile video coding, VVC), joint photographic experts group (joint photographic experts group, JPEG), high efficiency image file format (high efficiency image format, HEIF), advanced video coding (advanced video coding, AVC)/H.264, audio video coding standard (audio video coding standard, AVS), and high efficiency video coding (high efficiency video coding, HEVC) may be used. A location of the first metadata is not limited in this embodiment of this application either. For example, the first metadata may be placed in supplemental enhancement information (supplemental enhancement information, SEI), a network abstraction layer (network abstraction layer, NAL) unit, a reserved packet unit, application (application, APP) extension information, or the like.

Each encoding scheme in the at least one encoding scheme may be an encoding function. In some embodiments, the first indication information may indicate at least one encoding function. For example, the first indication information may carry the at least one encoding function. For another example, in some embodiments, each encoding function may have an index. The first indication information may carry at least one index, and the at least one index is in a one-to-one correspondence with the at least one encoding function. In this way, the decoder side may determine the corresponding at least one encoding function based on the at least one index, and may further determine a decoding function based on the encoding function.

In some embodiments, the encoding function may further include one or more parameters. The first indication information may indicate the at least one encoding function and a parameter of each encoding function. Similarly, the first indication information may carry the at least one encoding function and the parameter of each encoding function. The first indication information also carries an index of each encoding function and the parameter of each encoding function. In this way, the decoder side can determine the encoding function based on the index in the first indication information, and determine the parameter of the encoding function based on the parameter in the first indication information. In some other embodiments, the parameter of the encoding function may also have a corresponding index. In this case, the first indication information may carry at least one first index and at least one second index, the at least one first index is in a one-to-one correspondence with the at least one encoding function, and the at least one second index is in a one-to-one correspondence with the parameter of the at least one encoding function. In this way, the decoding device may determine the encoding function based on the first index and determine the parameter of the encoding function based on the second index.

In some embodiments, the first indication information may indicate the decoding function. In this way, the decoding device may no longer need to determine the corresponding decoding function based on the encoding function, reducing overheads of the decoding device. For example, in some embodiments, the first indication information may carry at least one decoding function, the at least one decoding function is in a one-to-one correspondence with the at least one encoding scheme, and each decoding function is used to decode a bitstream encoded by using the corresponding encoding scheme. Similarly, in some embodiments, the first indication information may carry at least one index, and the at least one index is in a one-to-one correspondence with the at least one decoding function. In this case, the decoding device may determine the at least one decoding function based on the at least one index carried in the first indication information.

In some embodiments, the decoding function may further include one or more parameters. The first indication information may carry the at least one decoding function and a parameter of each decoding function. The first indication information may also carry an index of each decoding function and the parameter of each decoding function. In this way, the decoding device can determine the decoding function based on the index of the decoding function, and determine the parameter of the decoding function based on the parameter carried in the first indication information. Similarly, in some embodiments, the parameter of each decoding function may also have a corresponding index. In this case, the first indication information may carry at least one third index and at least one fourth index, the at least one third index is in a one-to-one correspondence with the at least one decoding function, and the at least one fourth index is in a one-to-one correspondence with the parameter of the at least one decoding function. In this way, the decoding device can determine the decoding function based on the third index, and determine the parameter of the decoding function based on the third index.

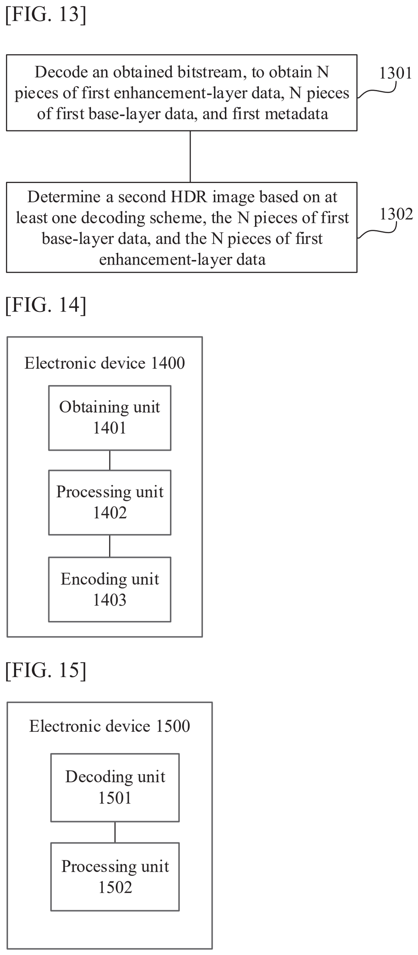

FIG. 13 is a schematic flowchart of a decoding method according to an embodiment of this application. The method shown in FIG. 13 may be performed by an electronic device or a component (for example, a chip or a SoC) in the electronic device. The electronic device may be the destination device 14 in FIG. 5, the terminal device 2106 shown in FIG. 6, or the terminal display device shown in FIG. 10. For ease of description, in the following embodiment, it is assumed that the method shown in FIG. 13 is performed by the electronic device.

1301: Decode an obtained bitstream, to obtain N pieces of first enhancement-layer data, N pieces of first base-layer data, and first metadata, where the first metadata includes first indication information, and the first indication information indicates at least one decoding scheme. N is a positive integer greater than or equal to 1.

The bitstream may be encoded by an encoding device by using the method shown in FIG. 12. For ease of description, it is assumed that the method shown in FIG. 12 is performed by a first electronic device, and the method shown in FIG. 13 is performed by a second electronic device.

In some embodiments, the first electronic device and the second electronic device may be different electronic devices. For example, in some embodiments, after completing encoding, the first electronic device may send the bitstream to the second electronic device over a transmission link (for example, an optical fiber, Wi-Fi, or a 3G/4G/5G network). The second electronic device may receive the bitstream over the communication link. The first electronic device may also store the bitstream in a storage device (for example, a removable hard disk or a USB flash drive). The second electronic device may read the storage device, to obtain the bitstream stored in the storage device.

In some other embodiments, the first electronic device and the second electronic device may alternatively be a same electronic device. For example, a smartphone may shoot a video by using a camera component, and then obtain corresponding first metadata based on an original video file. After the original video file and the first metadata are encoded, a bitstream is obtained. The bitstream is encapsulated into a video file and stored in an internal memory of the smartphone. The smartphone may read the video file and obtain the bitstream. In this case, both the first electronic device and the second electronic device are the smartphone.

An encapsulation location of the first metadata is determined by the first electronic device during encoding. For example, in some embodiments, if the bitstream is obtained through encoding by using HEVC or VVC, the second electronic device may obtain the first metadata from SEI of the HEVC or the VVC. For another example, in some embodiments, if the bitstream is obtained through encoding by using AVC/H.264, the second electronic device may obtain the first metadata from a NAL unit or a reserved packet unit. For another example, in some embodiments, the second electronic device may obtain the first metadata from APP extension information encapsulated in a JPEG file interchange format (JPEG file interchange format). For another example, in some embodiments, the second electronic device may obtain the first metadata from a data segment encapsulated in a moving picture experts group (moving picture experts group, MPEG)-part 14 (MPEG-4 part 14, MP4).

Content carried in the first metadata may be some conventional information, such as a data format, region division information, region traversal sequence information, or an image feature, an encoding compression format, a curve parameter, and other data, and one or more metadata information units. The metadata information units may include data such as coordinate information, image features, and a curve parameter.

The first metadata may further include first indication information. The first indication information may indicate the at least one encoding scheme directly or indirectly. For example, in some embodiments, the first indication information may include the at least one decoding scheme. In this way, the second electronic device may directly obtain the at least one decoding scheme from the first indication information. For another example, in some other embodiments, the first indication information may include at least one encoding scheme, and each encoding scheme corresponds to one decoding scheme. In this way, the second electronic device may determine the at least one decoding scheme based on the at least one encoding scheme.

The second electronic device may decode the bitstream based on the first metadata, to obtain the first base-layer data. In some embodiments, the first base-layer data is base-layer data obtained after decoding. In other words, the second electronic device decodes the bitstream to obtain N pieces of base-layer data, and the N pieces of base-layer data may be used as the N pieces of first base-layer data. In some other embodiments, after decoding the bitstream to obtain the N pieces of base-layer data, the second electronic device may further convert the N pieces of base-layer data, where converted base-layer data is the first base-layer data. For a method for converting the base-layer data, refer to a manner of converting the first enhancement-layer data in the following embodiment. For brevity, details are not described herein again.

Bitstream formats of the base-layer data and the enhancement-layer data (including the first enhancement-layer data and second enhancement-layer data that is mentioned below) are not limited in this embodiment of this application. In terms of color space, the color space may be YUV, RGB, Lab, HSV, or the like. In terms of a bit width of data, the bit width may be 8 bits, 10 bits, 12 bits, or the like. In terms of a value domain, the value domain may be PQ, HLG, gamma, log, or the like.

1302: Determine a second HDR image based on the at least one decoding scheme, the N pieces of first base-layer data, and the N pieces of first enhancement-layer data.

Optionally, in some embodiments, the N pieces of first enhancement-layer data may be first decoded based on the at least one decoding scheme, to obtain N pieces of second enhancement-layer data. Then, the second HDR image is determined based on the N pieces of first base-layer data and the N pieces of second enhancement-layer data. The N pieces of first enhancement-layer data are in a one-to-one correspondence with the N pieces of second enhancement-layer data, and each piece of second enhancement-layer data in the N pieces of second enhancement-layer data is obtained after the corresponding first enhancement-layer data is decoded.

In some embodiments, the at least one decoding scheme may include N decoding schemes. The N decoding schemes are in a one-to-one correspondence with the N pieces of first enhancement-layer data. Each decoding scheme in the N decoding schemes is used to decode the corresponding first enhancement-layer data, to obtain the second enhancement-layer data. For example, an $i^{th}$ decoding scheme in the N decoding schemes may be used to decode an $i^{th}$ piece of first enhancement-layer data in the N pieces of first enhancement-layer data, to obtain an $i^{th}$ piece of second enhancement-layer data of the N pieces of second enhancement-layer data.

For example, in some embodiments, compression encoding may be performed on the first enhancement-layer data by using PQ/HLG/gamma/log. In this case, the second electronic device may decode the first enhancement-layer data by using a corresponding decoding function to obtain the second enhancement-layer data. As described above, in some embodiments, an encoding scheme and a parameter (for example, a base of a log function) in the encoding scheme may be pre-agreed on or preset by an encoding side and a decoder side. In this case, the second electronic device may directly decode the first enhancement-layer data to obtain the second enhancement-layer data. In some other embodiments, the encoding scheme and/or the parameter in the encoding scheme are not pre-determined or preset. The first metadata may carry the encoding scheme and/or the parameter in the encoding scheme. The second electronic device may determine, from the metadata, the encoding scheme and/or the parameter in the encoding scheme, and then decode the first enhancement-layer data based on the determined encoding scheme and/or parameter in the encoding scheme, to obtain the second enhancement-layer data.

For another example, in some embodiments, compression encoding may be performed on the first enhancement-layer data by using any function curve. The first metadata may carry an inverse function of a corresponding function. The second electronic device may decode the first enhancement-layer data by using the inverse function carried in the first metadata, to obtain the corresponding second enhancement-layer data. Certainly, in some other embodiments, a function curve used for compression encoding may also be pre-agreed on or preset by two parties (that is, the encoding side and the decoder side). In this case, the second electronic device may decode the first enhancement-layer data directly by using the inverse function to obtain the second enhancement-layer data.

For another example, in some embodiments, the first enhancement-layer data may be compressed by using an encoding format whose parameter, such as a log (log) function or an exponential function, is configurable. In this case, in addition to specifying a specific format, the first metadata further includes function parameter information that is flexibly configured based on different scenarios, for example, a base of a logarithmic function and a power of an exponential function. In this case, the second electronic device may determine the format and the function parameter information based on the first metadata, and then decode the first enhancement-layer data based on the determined format and parameter information, to obtain the second enhancement-layer data. Certainly, in some other embodiments, the format of the function and/or the function parameter may be pre-agreed on or preset. If the format of the function and the function parameter are both pre-determined or preset, the second electronic device may directly decode the first enhancement-layer data to obtain the second enhancement-layer data. If one of the function format and the function parameter is pre-agreed on or preset, the other is carried in the first metadata. For example, in some embodiments, the function format is pre-agreed on or preset. In this case, the second electronic device may obtain the function parameter from the first metadata, and then decode the first enhancement-layer data based on the pre-set on or preset function format and the function parameter that is obtained from the first metadata, to obtain the second enhancement-layer data.

In some embodiments, if N is a positive integer greater than or equal to 2, any two decoding schemes in the N decoding schemes may be different decoding schemes. Different decoding schemes may include different schemes and/or different parameters. For example, it is assumed that a decoding scheme A and a decoding scheme B are two decoding schemes in the N decoding schemes. The decoding scheme A is used to decode enhancement-layer data encoded by using the logarithmic function, and the decoding scheme B is used to decode enhancement-layer data on which compression encoding is performed by using the function curve. For another example, the decoding scheme A and the decoding scheme B are both used to decode the enhancement-layer data encoded by using the logarithmic function, but a base of the logarithmic function for encoding corresponding to the decoding scheme A is 2, and a base of the logarithmic function for encoding corresponding to the decoding scheme B is 3.

In some other embodiments, if N is a positive integer greater than or equal to 2, any two decoding schemes in the N decoding schemes may be same decoding schemes. For example, the decoding scheme A and the decoding scheme B are any two decoding schemes in the N decoding schemes. The two decoding schemes are both used to decode the enhancement-layer data that is encoded by using the logarithmic function with the base of 2.

In some embodiments, during encoding, the first electronic device divides data that needs to be encoded into a plurality of regions, and then encodes the plurality of regions respectively by using a plurality of encoding schemes. Correspondingly, the second electronic device may decode the plurality of regions of the first enhancement-layer data respectively by using a plurality of decoding schemes, to obtain the second enhancement-layer data. The second enhancement-layer data also includes a plurality of regions. For ease of description, a region of the first enhancement layer data may be referred to as a third region, and a region of the second enhancement-layer data may be referred to as a fourth region. In other words, the first enhancement-layer data may include a plurality of third regions, and the second enhancement-layer data may include a plurality of fourth regions. The plurality of third regions are in a one-to-one correspondence with the plurality of fourth regions, and the plurality of third regions are also in a one-to-one correspondence with the plurality of decoding schemes. Each fourth region in the plurality of fourth regions is obtained after the corresponding third region is decoded by using a corresponding decoding scheme.

For example, it is assumed that the $i^{th}$ piece of first enhancement-layer data in the N pieces of first enhancement-layer data includes $N_i$ third regions, where $N_i$ is a positive integer greater than or equal to 2. In this case, the $N_i$ third regions included in the $i^{th}$ piece of first enhanced data may be decoded respectively by using $N_i$ decoding schemes, to obtain the $i^{th}$ piece of second enhanced data in the N pieces of second enhanced data, where the $i^{th}$ piece of second enhanced data includes $N_i$ fourth regions. The $N_i$ fourth regions are respectively obtained through decoding by using the $N_i$ decoding schemes. In other words, a $j^{th}$ fourth region in the $N_i$ fourth regions is obtained after the $N_i$ third regions are decoded by using a $j^{th}$ encoding scheme in the $N_i$ decoding schemes. $N_i$ is a positive integer greater than or equal to 2.

For example, assuming that N=3, the $1^{st}$ piece of first enhancement-layer data may be divided into Ni third regions. The $N_i$ third regions are decoded by using $N_i$ decoding schemes, to obtain $N_1$ fourth regions. The $1^{st}$ piece of second enhancement-layer data includes the $N_1$ fourth regions. Similarly, the $2^{nd}$ piece of first enhancement-layer data may be divided into $N_2$ third regions. The $N_2$ third regions are decoded by using $N_2$ decoding schemes, to obtain $N_2$ fourth regions. The $2^{nd}$ piece of second enhancement-layer data includes the $N_2$ fourth regions. The $3^{rd}$ piece of first enhancement-layer data may be divided into $N_3$ third regions. The $N_3$ third regions are decoded by using $N_3$ decoding schemes, to obtain $N_3$ fourth regions. The $3^{rd}$ piece of second enhancement-layer data includes the $N_3$ fourth regions.

In some embodiments, any two pieces of first enhancement-layer data may be divided into a same quantity of regions. Still using N=3 as an example, in this case, $N_1=N_2=N_3$.

In some embodiments, any two pieces of first enhancement-layer data may be divided into a same quantity of regions or different quantities of regions. Still using N=3 as an example, in this case, a relationship between $N_1$, $N_2$, and $N_3$ may be any one of the following: $N_1=N_2 \neq N_3$, $N_1 \neq N_2=N_3$, and $N_1 \neq N_2 \neq N_3$.

Similarly, in some embodiments, any two decoding schemes in the $N_i$ decoding schemes may be different decoding schemes. For example, it is assumed that a decoding scheme 1 and a decoding scheme 2 are two decoding schemes in the $N_i$ decoding schemes, the decoding scheme 1 is used to decode the first enhancement-layer data encoded by using the function curve, and the decoding scheme 2 is used to decode the first enhancement-layer data encoded by using the logarithmic function.

In some other embodiments, any two decoding schemes in the $N_i$ decoding schemes may be same decoding schemes but have different parameters. For example, it is assumed that the decoding scheme 1 and the decoding scheme 2 are two decoding schemes in the $N_i$ decoding schemes. The decoding scheme 1 and the decoding scheme 2 are both used to decode the first enhancement-layer data encoded by using the logarithmic function, but a base of the logarithmic function corresponding to the decoding scheme 1 is 2, and a base of the logarithmic function corresponding to the decoding scheme 2 is 3.

In some other embodiments, any two decoding schemes in the $N_i$ decoding schemes may be same decoding schemes and have same parameters. For example, it is assumed that the decoding scheme 1 and the decoding scheme 2 are two decoding schemes in the $N_i$ decoding schemes. Both the decoding scheme 1 and the decoding scheme 2 are used to decode the first enhancement-layer data encoded by using the logarithmic function, and bases of logarithmic functions corresponding to the encoding scheme 1 and the encoding scheme 2 are both 2. In this case, the $N_i$ encoding schemes may also be considered as one encoding scheme.

In this case, the first indication information may indicate N groups of decoding schemes, an $i^{th}$ group of decoding schemes in the N groups of decoding schemes include $N_i$ decoding schemes, and the $N_i$ decoding schemes are in a one-to-one correspondence with the $N_i$ encoding schemes. The $N_i$ decoding schemes are respectively used to decode the $N_i$ regions in the $i^{th}$ piece of first enhancement-layer data.

Optionally, in some embodiments, the second HDR image may be determined directly based on the N pieces of second enhancement-layer data and the N pieces of first base-layer data.

It is assumed that N is equal 1, HDRβ[j] is used to represent a value of a $j^{th}$ pixel in the second HDR image, baseβ[j] is used to represent a value of a $j^{th}$ pixel in the first base-layer data, and Enhanceβ[j] is used to represent a value of a $j^{th}$ pixel in the second enhancement-layer data. In this case, in some embodiments, HDRβ[j], baseβ[j], and Enhanceβ[j] meet the following relationship:

$$HDR\beta[j]=base\beta[j]\times f(Enhance\beta[j]), \text{ (formula 6.1)}.$$

In some other embodiments, HDRβ[j], baseβ[j], and Enhanceβ[j] meet the following relationship:

$$HDR\beta[j]=base\beta[j]+f(Enhance\beta[j]), \text{ (formula 6.2)}.$$

f( ) in formula 6.1 and formula 6.2 may be a default transformation function, or may be a transformation function specified by metadata. This is not limited in this embodiment of this application. In addition, an analytic expression of the transformation function is not limited in this embodiment of this application. For example, in some embodiments, f(Enhanceβ[j])=Enhanceβ[j]. For another example, in some other embodiments, f(Enhanceβ[j])=C×Enhanceβ[j], where the parameter C may be a preset value or a value determined based on Enhanceβ[j]. For another example, in some other embodiments, f(Enhanceβ[j])=Enhanceβ[j]+D, and the parameter D may be a preset value or a value determined based on Enhanceβ[j].

If N is a positive integer greater than or equal to 2, HDRβ[j] may be used to represent the value of the $j^{th}$ pixel in the second HDR image, baseβi[j] may be used to represent a value of a $j^{th}$ pixel in an $i^{th}$ piece of first base-layer data in the N pieces of first base-layer data, and Enhanceβ$_i$[j] is used to represent a value of a $j^{th}$ pixel in an $i^{th}$ piece of second enhancement-layer data in the N pieces of second enhancement-layer data, where i is greater than or equal to 1 and less than or equal to N, that is, i=1, ..., N. In this case, in some other embodiments, HDRβ[j], baseβ$_i$[j], and Enhanceβ$_i$[j] meet the following relationship:

$$HDR\beta[j]=A_1\times base\beta_1[j]\times f_1(Enhance\beta_1[j])+A_2\times base\beta_2[j]\times f_2(Enhance\beta_2[j])+...+A_N\times base\beta_N[j]\times f_N(Enhance\beta_N[j]), \hspace{2cm} \text{(formula 6.3)}.$$

In some other embodiments, HDRβ[j], baseβ$_i$[j], and Enhanceβ$_i$[j] meet the following relationship:

$$HDR\beta[j]=A_1\times base\beta_1[j]+B_1\times f_1(Enhance\beta_1[j])+A_2\times base\beta_2[j]+B_2\times f_2(Enhance\beta_2[j])+... +A_N\times base\beta_N[j]+B_N\times f_N(Enhance\beta_N[j]), \hspace{1cm} \text{(formula 6.4)}.$$

$f_1( )$, $f_2( )$, ..., and $f_N( )$ in formula 6.3 and formula 6.4 represent transformation functions. In some embodiments, the transformation function may be default or pre-negotiated. In some other embodiments, the transformation function may be indicated by the first metadata.

$A_1$, $A_2$, ..., and $A_N$ in formula 6.3 and formula 6.4 may represent constants or values indicated in the first metadata.

$B_1$, $B_2$, ..., and $B_N$ in formula 6.4 may represent constants or values indicated in the first metadata.

Optionally, in some embodiments, determining the second HDR image based on the N pieces of second enhancement-layer data and the N pieces of first base-layer data may include: processing the N pieces of second enhancement-layer data, to obtain N pieces of third enhancement-layer data; and determining the second HDR image based on the N pieces of third enhancement-layer data and the N pieces of first base-layer data. A manner of determining the second HDR image based on the N pieces of third enhancement-layer data and the N pieces of first base-layer data is the same as the foregoing manner of determining the second HDR image directly based on the N pieces of second enhancement-layer data and the N pieces of first base-layer data. For brevity, details are not described herein again.

Similarly, in some embodiments, before the second HDR image is determined based on the N pieces of second enhancement-layer data and the N pieces of first base-layer data, the N pieces of first base-layer data may alternatively be processed first, to obtain N pieces of second base-layer data, and then the second HDR image is determined based on the N pieces of third enhancement-layer data (or the N pieces of second enhancement-layer data) and the N pieces of second base-layer data. A manner of determining the second HDR image based on the N pieces of third enhancement-layer data (or the N pieces of second enhancement-layer data) and the N pieces of second base-layer data is the same as the foregoing manner of determining the second HDR image directly based on the N pieces of second enhancement-layer data and the N pieces of first base-layer data. For brevity, details are not described herein again. For a process of determining the second base-layer data, refer to a process of determining the third enhancement-layer data. The following mainly describes how to determine the N pieces of third enhancement-layer data based on the N pieces of second enhancement-layer data.

The N pieces of second enhancement-layer data are in a one-to-one correspondence with the N pieces of third enhancement-layer data, and each piece of third enhancement-layer data in the N pieces of third enhancement-layer data is determined based on the corresponding second enhancement-layer data. In other words, an $i^{th}$ piece of third enhancement-layer data in the N pieces of third enhancement-layer data is determined based on the $i^{th}$ piece of second enhancement-layer data in the N pieces of second enhancement-layer data, where i=1, ..., N.

The following uses one second enhancement layer as an example to describe a manner of determining the third enhancement-layer data. Each piece of third enhancement-layer data may be determined with reference to the following method.

In some embodiments, the first metadata may include a first value and a second value. THH is used to represent the first value, THL is used to represent the second value, $Enhance\beta[j]$ is used to represent the value of the $j^{th}$ pixel in the second enhancement-layer data, and $EnhanceAfter\beta[j]$ is used to represent a value of a $j^{th}$ pixel in the third enhancement-layer data. In this case, THH, THL, $Enhance\beta[j]$, and $EnhanceAfter\beta[j]$ meet the following relationship:

$$EnhanceAfter\beta[j]=Enhance\beta[j]\times THH+(A-Enhance\beta[j])\times THL, \text{ (formula 7.1)}$$

A is a maximum value of a normalization interval corresponding to the second enhanced data. For example, if the normalization interval is [0, 1], A is 1.

In an encoding process, intermediate enhanced data may be remapped based on a maximum value and/or a minimum value and a corresponding preset value, and the intermediate enhanced data is mapped to another value range interval (for example, the foregoing normalization interval). For ease of description, a value range interval of the intermediate enhanced data may be referred to as a first interval, and the value range interval obtained through remapping based on the preset value may be referred to as a second interval. A value range of the second enhancement-layer data is within the second interval. Based on the foregoing technical solution, the second enhanced data may be remapped back to the first interval. The first value and the second value are the maximum value and the minimum value of the intermediate enhanced data in the first interval.

In some other embodiments, a mapping function TMB( ) may be determined based on the first metadata. The third enhanced data may be determined based on the mapping function. $Enhance\beta[j]$ is used to represent the second enhancement-layer data, and $EnhanceAfter\beta[j]$ is used to represent the third enhancement-layer data. In this case, $Enhance\beta[j]$ and $EnhanceAfter\beta[j]$ meet the following relationship:

$$EnhanceAfter\beta[j]=TMB(Enhance\beta[j]), \text{ (formula 8.1).}$$

In some other embodiments, $Enhance\beta[j]$ and $EnhanceAfter\beta[j]$ meet the following relationship:

$$EnhanceAfter\beta[j]=TMB(\ )\times Enhance\beta[j], \text{ (formula 8.2).}$$

In the encoding process, a mapping relationship may be determined based on a histogram of the intermediate enhanced data, and then the intermediate enhanced data is mapped to another value range interval based on the mapping relationship. The first interval is still used to represent the value range interval of the intermediate enhanced data, and the second interval is used to represent the value range interval obtained after mapping. The value range of the second enhancement-layer data is within the second interval. Based on the foregoing technical solution, the second enhanced data may be remapped back to the first interval. TMB( ) is an inverse function of the mapping relationship. In some embodiments, the first metadata may directly carry TMB( ). In some other embodiments, the first metadata may carry the mapping relationship. The second electronic device may infer TMB( ) based on the mapping relationship.

In some other embodiments, the second enhancement-layer data may alternatively be processed through some signal processing processes to obtain the third enhancement-layer data. In this case, $Enhance\beta[j]$ and $EnhanceAfter\beta[j]$ meet the following relationship:

$$EnhanceAfter\beta[j]=F(Enhance\beta[j]), \text{ (formula 9.1)}$$

F( ) represents a signal processing process. The signal processing may be filtering (for example, bilateral filtering, interpolation filtering, or nearest-neighbor filtering), denoising, or another image processing method. This is not limited in this application.

In some other embodiments, the second enhancement-layer data may alternatively be remapped back to the first interval by using formula 7.1, formula 7.2, or formula 8.2 first, to obtain the third enhancement-layer data, and then the third enhancement-layer data is processed by using formula 9.1, to obtain fourth enhancement-layer data. In this case, the second HDR image is determined based on N pieces of fourth enhancement-layer data and the N pieces of first base-layer data. A manner of determining the second HDR image based on the N pieces of fourth enhancement-layer data and the N pieces of first base-layer data is the same as the foregoing manner of determining the second HDR image directly based on the N pieces of second enhancement-layer data and the N pieces of first base-layer data. For brevity, details are not described herein again.

In some embodiments, after the second HDR image is obtained, transform processing may be further performed on the second HDR image, to obtain a third HDR image. For example, color space conversion, color gamut conversion, color compensation, and the like may be performed on the second HDR image to obtain the third HDR image.

FIG. 14 is a block diagram of a structure of an electronic device according to an embodiment of this application. The electronic device 1400 shown in FIG. 14 includes an obtaining unit 1401, a processing unit 1402, and an encoding unit 1403.

The obtaining unit 1401 is configured to obtain a first HDR image and N pieces of first base-layer data corresponding to the first HDR image.

The processing unit 1402 is configured to determine N pieces of first enhancement-layer data based on the first HDR image, the first base-layer data, and at least one encoding scheme, where N is a positive integer greater than or equal to 1.

The encoding unit 1403 is configured to encode the N pieces of first enhancement-layer data, the N pieces of first base-layer data, and first metadata to obtain a bitstream, where the first metadata includes first indication information, and the first indication information indicates the at least one encoding scheme or a decoding scheme corresponding to the at least one encoding scheme.

For specific functions and beneficial effects of the obtaining unit 1401, the processing unit 1402, and the encoding unit 1403, refer to the foregoing embodiments. For brevity, details are not described herein again.

In some embodiments, the obtaining unit 1401, the processing unit 1402, and the encoding unit 1403 may be implemented by a processor.

FIG. 15 is a block diagram of a structure of another electronic device according to an embodiment of this application. The electronic device 1500 shown in FIG. 15 includes a decoding unit 1501 and a processing unit 1502.

The decoding unit 1501 is configured to decode an obtained bitstream, to obtain N pieces of first enhancement-layer data, N pieces of first base-layer data, and first metadata, where the first metadata includes first indication information, the first indication information is used to determine at least one decoding scheme, and N is a positive integer greater than or equal to 1.

The processing unit 1502 is configured to determine a second HDR image based on the at least one decoding scheme, the N pieces of first base-layer data, and the N pieces of first enhancement-layer data.

For specific functions and beneficial effects of the decoding unit 1501 and the processing unit 1502, refer to the foregoing embodiments. For brevity, details are not described herein again.

In some embodiments, the decoding unit 1501 and the processing unit 1502 may be implemented by a processor.

An embodiment of this application further provides an electronic device. The electronic device may be configured to implement the foregoing encoding method embodiment. The electronic device includes a processor and a memory. The processor is configured to: execute a computer program or instruction stored in the memory, or read data/signaling stored in the memory, to perform the methods in the foregoing method embodiments. The memory may be coupled to the processor, or may be disposed separately. The memory may be further configured to store a bitstream determined by the processor. Optionally, there are one or more processors. Optionally, there are one or more memories. Optionally, the electronic device may further include a transceiver (or referred to as a communication interface), and the transceiver is configured to receive and/or send a signal. For example, the transceiver may be configured to send the bitstream determined by the processor to another electronic device.

An embodiment of this application further provides an electronic device. The electronic device may be configured to implement the foregoing decoding method embodiment. The electronic device includes a processor and a memory. The processor is configured to: execute a computer program or instruction stored in the memory, or read data/signaling stored in the memory, to perform the methods in the foregoing method embodiments. The memory may be coupled to the processor, or may be disposed separately. Optionally, there are one or more processors. Optionally, there are one or more memories. Optionally, the electronic device may further include a transceiver (or referred to as a communication interface), and the transceiver is configured to receive and/or send a signal. For example, the transceiver may be configured to receive a bitstream.

It should be understood that, the processor mentioned in this embodiment of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in this embodiment of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

Optionally, the electronic device may be a chip.

An embodiment of this application further provides a system on chip. The system on chip (or may be referred to as a processing system) includes a logic circuit and an input/output interface (input/output interface).

The logic circuit may be a processing circuit in the system on chip. The logic circuit may be coupled and connected to a storage unit, and invoke instructions in the storage unit, so that the system on chip can implement the methods and functions in embodiments of this application. The input/output interface may be an input/output circuit in the system on chip, and outputs information processed by the system on chip, or inputs to-be-processed data or signaling information to the system on chip for processing.

In a solution, the system on chip is configured to implement the foregoing encoding method embodiments. For example, the system on chip is configured to implement a processing-related operation performed by the source device, the capture device, or the front-end device in the foregoing method embodiments.

In a solution, the system on chip is configured to implement the foregoing decoding method embodiments. For example, the system on chip is configured to implement a processing-related operation performed by the destination device, the terminal device, or the terminal display device in the foregoing method embodiments.

An embodiment of this application further provides a computer-readable storage medium, storing computer instructions for implementing the methods performed by the encoding device (for example, the source device, the capture device, or the front-end device) in the foregoing method embodiments.

An embodiment of this application further provides a computer-readable storage medium, storing computer instructions for implementing the methods performed by the decoding device (for example, the destination device, the terminal device, or the terminal display device) in the foregoing method embodiments.

An embodiment of this application further provides a computer program product, including instructions. When the instructions are executed by a computer, the methods performed by the encoding device in the foregoing method embodiments are implemented.

An embodiment of this application further provides a computer program product, including instructions. When the instructions are executed by a computer, the methods performed by the decoding device in the foregoing method embodiments are implemented.

An embodiment of this application further provides a communication system, including the foregoing encoding device and decoding device.

An embodiment of this application further provides a bitstream. The bitstream is determined by using the foregoing encoding method.

An embodiment of this application further provides a bitstream storage apparatus. The apparatus is configured to store a bitstream determined by using the foregoing encoding method.

This application further provides a computer device. The computer device includes a memory, and the memory is configured to store a bitstream determined by using the foregoing encoding method.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An encoding method, wherein the method comprises:

   obtaining a first HDR image and N pieces of first base-layer data corresponding to the first HDR image;
   determining N pieces of first enhancement-layer data based on the first HDR image, the N pieces of first base-layer data, and at least one encoding scheme, wherein N is a positive integer greater than or equal to 1; and
   encoding the N pieces of first enhancement-layer data, the N pieces of first base-layer data, and first metadata to obtain a bitstream, wherein the first metadata comprises first indication information, and the first indication information indicates the at least one encoding scheme or a decoding scheme corresponding to the at least one encoding scheme.

2. The method according to claim 1, wherein determining the N pieces of first enhancement-layer data based on the first HDR image, the N pieces of first base-layer data, and the at least one encoding scheme comprises:

   determining N pieces of intermediate enhanced data based on the first HDR image and the N pieces of first base-layer data; and
   encoding the N pieces of intermediate enhanced data based on the at least one encoding scheme, to obtain the N pieces of first enhancement-layer data.

3. The method according to claim 2, wherein encoding the N pieces of intermediate enhanced data based on the at least one encoding scheme, to obtain the N pieces of first enhancement-layer data comprises:

   encoding an $i^{th}$ piece of intermediate enhanced data in the N pieces of intermediate enhanced data by using $N_i$ encoding schemes separately, to obtain an $i^{th}$ piece of first enhancement-layer data in the N pieces of first enhancement-layer data, wherein the $i^{th}$ piece of first enhancement-layer data comprises $N_i$ regions; and
   encoding the $i^{th}$ piece of intermediate enhanced data by using the $N_i$ encoding schemes comprises:
   encoding $N_i$ regions of the $i^{th}$ piece of intermediate enhanced data by using the $N_i$ encoding schemes, wherein $N_i$

is a positive integer greater than or equal to 2, and i=1, ..., N.

4. The method according to claim 3, wherein the at least one encoding scheme comprises M groups of encoding schemes, one group of encoding schemes that are in the M groups of encoding schemes and that correspond to the i<sup>th</sup> piece of intermediate enhanced data comprise the $N_i$ encoding schemes, and M is a positive integer greater than or equal to 1.

5. The method according to claim 2, wherein the at least one encoding scheme comprises M encoding schemes, and encoding the N pieces of intermediate enhanced data based on the at least one encoding scheme, to obtain the N pieces of first enhancement-layer data comprises:
encoding an i<sup>th</sup> piece of intermediate enhanced data in the N pieces of intermediate enhanced data by using an encoding scheme that is in the M encoding schemes and that corresponds to the i<sup>th</sup> piece of intermediate enhanced data, to obtain an i<sup>th</sup> piece of first enhancement-layer data in the N pieces of first enhancement-layer data, wherein M is a positive integer greater than or equal to 1, and i=1, ..., N.

6. The method according to any one of claims 2 to 5, wherein determining the N pieces of intermediate enhanced data based on the first HDR image and the N pieces of first base-layer data comprises:

   determining N pieces of reference intermediate enhanced data based on the first HDR image and the N pieces of first base-layer data, wherein the reference intermediate enhanced data is multi-channel data; and
   determining the i<sup>th</sup> piece of intermediate enhanced data in the N pieces of intermediate enhanced data based on an i<sup>th</sup> piece of reference intermediate enhanced data in the N pieces of reference intermediate enhanced data, wherein the intermediate enhanced data is single-channel data, and i=1, ..., N.

7. The method according to claim 6, wherein determining the i<sup>th</sup> piece of intermediate enhanced data in the N pieces of intermediate enhanced data based on the i<sup>th</sup> piece of reference intermediate enhanced data in the N pieces of reference intermediate enhanced data comprises:
determining that the i<sup>th</sup> piece of intermediate enhanced data comprises data of one channel of the i<sup>th</sup> piece of reference intermediate enhanced data.

8. The method according to claim 6, wherein determining the i<sup>th</sup> piece of intermediate enhanced data in the N pieces of intermediate enhanced data based on the i<sup>th</sup> piece of reference intermediate enhanced data in the N pieces of reference intermediate enhanced data comprises:

   separately transforming multi-channel data of the i<sup>th</sup> piece of reference intermediate enhanced data to obtain a plurality of transformation results, wherein the plurality of transformation results are in a one-to-one correspondence with the multi-channel data, and each transformation result in the plurality of transformation results is obtained after a corresponding channel is transformed; and
   determining that the i<sup>th</sup> piece of intermediate enhanced data is a transformation result in the plurality of transformation results.

9. The method according to claim 6, wherein determining the i<sup>th</sup> piece of intermediate enhanced data in the N pieces of intermediate enhanced data based on the i<sup>th</sup> piece of reference intermediate enhanced data in the N pieces of reference intermediate enhanced data comprises:
determining the i<sup>th</sup> piece of intermediate enhanced data based on a function relationship and multi-channel data of the i<sup>th</sup> piece of reference intermediate enhanced data.

10. The method according to claim 9, wherein the i<sup>th</sup> piece of intermediate enhanced data comprises values of a plurality of pixels, each pixel in the plurality of pixels corresponds to a plurality of groups of pixels, the plurality of groups of pixels respectively belong to the multi-channel data of the i<sup>th</sup> piece of reference intermediate enhanced data, each group of pixels in the plurality of groups of pixels comprise at least one pixel, and a pixel value of each pixel in the plurality of pixels is determined based on pixel values of the corresponding plurality of groups of pixels and the function relationship.

11. The method according to any one of claims 1 to 10, wherein the at least one encoding scheme comprises one or more of the following encoding schemes:
PQ encoding, HLG encoding, gamma encoding, log encoding, or any curve encoding.

12. The method according to any one of claims 1 to 11, wherein the first indication information indicates:

at least one encoding function;
the at least one encoding function and a parameter of each encoding function in the at least one encoding function;
the at least one decoding function; or
the at least one decoding function and a parameter of each decoding function in the at least one decoding function.

13. A decoding method, wherein the method comprises:

decoding an obtained bitstream, to obtain N pieces of first enhancement-layer data, N pieces of first base-layer data, and first metadata, wherein the first metadata comprises first indication information, the first indication information is used to determine at least one decoding scheme, and N is a positive integer greater than or equal to 1; and
determining a second HDR image based on the at least one decoding scheme, the N pieces of first base-layer data, and the N pieces of first enhancement-layer data.

14. The method according to claim 13, wherein determining the second HDR image based on the at least one decoding scheme, the N pieces of first base-layer data, and the N pieces of first enhancement layer comprises:

decoding the N pieces of first enhancement-layer data based on the at least one decoding scheme, to obtain N pieces of second enhancement-layer data; and
determining the second HDR image based on the N pieces of first base-layer data and the N pieces of second enhancement-layer data.

15. The method according to claim 14, wherein decoding the N pieces of first enhancement-layer data based on the at least one decoding scheme, to obtain the N pieces of second enhancement-layer data comprises:

decoding an $i^{th}$ piece of first enhanced data in the N pieces of first enhanced data separately by using $N_i$ decoding schemes, to obtain an $i^{th}$ piece of second enhancement-layer data in the N pieces of second enhancement-layer data, wherein the $i^{th}$ piece of first enhancement-layer data comprises $N_i$ regions; and
decoding the $i^{th}$ piece of first enhanced data by using the $N_i$ decoding schemes comprises:
decoding the $N_i$ regions of the $i^{th}$ piece of first enhanced data by using the $N_i$ decoding schemes, wherein $N_i$ is a positive integer greater than or equal to 2, and i=1, ..., N.

16. The method according to claim 15, wherein the at least one decoding scheme comprises M groups of decoding schemes, one group of decoding schemes that are in the M groups of decoding schemes and that correspond to the $i^{th}$ piece of first enhancement-layer data comprise the $N_i$ decoding schemes, and M is a positive integer greater than or equal to 1.

17. The method according to claim 14, wherein the at least one decoding scheme comprises M decoding schemes; and decoding the N pieces of first enhancement-layer data based on the at least one decoding scheme, to obtain the N pieces of second enhancement-layer data comprises:
decoding an $i^{th}$ piece of first enhancement-layer data in the N pieces of first enhancement-layer data by using a decoding scheme that is in the M decoding schemes and that corresponds to the $i^{th}$ first enhancement-layer data, to obtain an $i^{th}$ piece of second enhancement-layer data in the N pieces of second enhancement-layer data, wherein M is a positive integer greater than or equal to 1, and i=1, ..., N.

18. The method according to any one of claims 13 to 17, wherein the at least one decoding scheme comprises a decoding scheme corresponding to one or more encoding schemes in the following encoding schemes:
PQ encoding, HLG encoding, gamma encoding, log encoding, or any curve encoding.

19. The method according to any one of claims 13 to 18, wherein the first indication information indicates:

at least one encoding function;
the at least one encoding function and a parameter of each encoding function in the at least one encoding function;

the at least one decoding function; or

the at least one decoding function and a parameter of each decoding function in the at least one decoding function.

20. An electronic device, wherein the electronic device comprises units configured to implement the method according to any one of claims 1 to 12, or comprises units configured to implement the method according to any one of claims 13 to 19.

21. A computer device, comprising a processor, wherein the processor is configured to: be coupled to a memory, and read and execute instructions and/or program codes in the memory, to perform the method according to any one of claims 1 to 12, or perform the method according to any one of claims 13 to 19.

22. A system on chip, comprising a logic circuit, wherein the logic circuit is configured to: be coupled to an input/output interface and transmit data through the input/output interface, to perform the method according to any one of claims 1 to 12, or perform the method according to any one of claims 13 to 19.

23. A computer-readable medium, wherein the computer-readable medium stores program code, and when the computer program code is run on a computer, the computer is enabled to perform the method according to any one of claims 1 to 12 or the method according to any one of claims 13 to 19.

24. A bitstream, wherein the bitstream is determined based on the method according to any one of claims 1 to 12.

[FIG. 1]

[FIG. 2]

[FIG. 3]

[FIG. 4]

[FIG. 5]

Encoding and decoding system 10

Source device
12

Image source
16

Image data
17

Preprocessor
18

Preprocessed
image data
19

Encoder
20

Encoded
image data
21

Communication
interface
22

Communication channel 13

Destination device
14

Display device
34

Post-processed
image data
33

Post-processor
32

Decoded
image data
31

Decoder
30

Encoded
image data
21

Communication
interface
28

EP 4 694 120 A1

[FIG. 6]

2100

2106

Computer/Notebook
computer
2110

Network video
recorder/Digital
video recorder 2112

Television 2114

2102

2104

Set-top box 2116

2126

Capture device

Video conference
system 2118

Display

Video surveillance
system 2120

Personal digital
assistant 2112

In-vehicle device
2124

…

[FIG. 7]

[FIG. 8]

EP 4 694 120 A1

[FIG. 9]

Client device

Content delivery network (CDN)

Cloud server

[FIG. 10]

Front-end device

HDR/SDR content

Transmission link

Terminal display device

HDR display device

SDR display device

[FIG. 11]

Base layer

Enhance-ment layer

Metadata

HDR image synthesis

Decoding module

Processing 1

Processing 2

Image processing module

Display

Display module

[FIG. 12]

Obtain a first HDR image and N pieces of first base-layer data corresponding to the first HDR image
1201

Determine N pieces of first enhancement-layer data based on the first HDR image, the N pieces of first base-layer data, and at least one first encoding scheme
1202

Encode the N pieces of first enhancement-layer data, the N pieces of first base-layer data, and first metadata to obtain a bitstream
1203

[FIG. 13]

Decode an obtained bitstream, to obtain N
pieces of first enhancement-layer data, N pieces
of first base-layer data, and first metadata — 1301

Determine a second HDR image based on at
least one decoding scheme, the N pieces of first
base-layer data, and the N pieces of first
enhancement-layer data — 1302

[FIG. 14]

Electronic device 1400

Obtaining unit
1401

Processing unit
1402

Encoding unit
1403

[FIG. 15]

Electronic device 1500

Decoding unit
1501

Processing unit
1502

## INTERNATIONAL SEARCH REPORT

| International application No. |
|---|
| **PCT/CN2024/111115** |

**A.  CLASSIFICATION OF SUBJECT MATTER**

H04N 19/157(2014.01)i

According to International Patent Classification (IPC) or to both national classification and IPC

**B.  FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: HDR, 高动态范围, BL, 基本层, 基础层, EL, 增强层, 元数据, 指示, 标识, 多个, N个, 类型, 方式, 方案, 编码, 解码, high dynamic range, enhancement layer, basic layer, metadata, indication, multiple, type, mode, encode, decode

**C.  DOCUMENTS CONSIDERED TO BE RELEVANT**

| Category* | Citation of document, with indication, where appropriate, of the relevant passages | Relevant to claim No. |
|---|---|---|
| A | US 2013314495 A1 (DOLBY LABORATORIES LICENSING CORP.) 28 November 2013 (2013-11-28) <br> description, paragraphs 0045-0062, and figures 1, 2A, and 2B | 1-24 |
| A | WO 2019167952 A1 (SONY CORP.) 06 September 2019 (2019-09-06) <br> entire document | 1-24 |
| A | EP 3099073 A1 (THOMSON LICENSING) 30 November 2016 (2016-11-30) <br> entire document | 1-24 |
| A | CN 109983772 A (QUALCOMM INC.) 05 July 2019 (2019-07-05) <br> entire document | 1-24 |
| A | CN 109314787 A (DOLBY LABORATORIES LICENSING CORP.) 05 February 2019 (2019-02-05) <br> entire document | 1-24 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 November 2024** | **13 November 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/111115**

| Patent document cited in search report | | | Publication date (day/month/year) | Patent family member(s) | | | Publication date (day/month/year) |
|---|---|---|---|---|---|---|---|
| US | 2013314495 | A1 | 28 November 2013 | EP | 2667610 | A2 | 27 November 2013 |
| | | | | HK | 1190544 | A0 | 04 July 2014 |
| WO | 2019167952 | A1 | 06 September 2019 | None | | | |
| EP | 3099073 | A1 | 30 November 2016 | None | | | |
| CN | 109983772 | A | 05 July 2019 | KR | 20190089889 | A | 31 July 2019 |
| | | | | KR | 20190089888 | A | 31 July 2019 |
| | | | | TW | 201824866 | A | 01 July 2018 |
| | | | | EP | 3549343 | A1 | 09 October 2019 |
| | | | | WO | 2018102604 | A1 | 07 June 2018 |
| | | | | JP | 2020501430 | A | 16 January 2020 |
| | | | | TW | 201824867 | A | 01 July 2018 |
| | | | | AU | 2017368247 | A1 | 02 May 2019 |
| | | | | US | 2018152721 | A1 | 31 May 2018 |
| | | | | WO | 2018102605 | A1 | 07 June 2018 |
| | | | | JP | 2020501426 | A | 16 January 2020 |
| | | | | BR | 112019010468 | A2 | 10 September 2019 |
| | | | | AU | 2017367694 | A1 | 02 May 2019 |
| | | | | EP | 3549342 | A1 | 09 October 2019 |
| | | | | US | 2018152703 | A1 | 31 May 2018 |
| | | | | BR | 112019010515 | A2 | 01 October 2019 |
| | | | | IN | 201947014117 | A | 31 May 2019 |
| | | | | HK | 40004324 | A0 | 24 April 2020 |
| CN | 109314787 | A | 05 February 2019 | EP | 3446484 | A1 | 27 February 2019 |
| | | | | WO | 2017184656 | A1 | 26 October 2017 |
| | | | | US | 2019141337 | A1 | 09 May 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311035466
- CN 202411079347X